# EUROPÄISCHE PATENTSCHRIFT

(11) **EP 2 932 441 B1**
(45) Veröffentlichungstag und Bekanntmachung des Hinweises auf die Patenterteilung: **29.03.2017**
(21) Anmeldenummer: 13811855.9
(22) Anmeldetag: 13.12.2013
(51) Int. Cl.: G06K 19/077, G06K 7/00

(54) **VERFAHREN UND VORRICHTUNG ZUR HERSTELLUNG EINES WERT- UND/ODER SICHERHEITSDOKUMENTS MIT EINER ANTENNENSTRUKTUR**
METHOD AND DEVICE FOR PRODUCING A VALUE DOCUMENT AND/OR SECURITY DOCUMENT HAVING AN ANTENNA STRUCTURE
PROCÉDÉ ET DISPOSITIF DE FABRICATION D'UN DOCUMENT DE VALEUR ET/OU DE SÉCURITÉ DOTÉ D'UNE STRUCTURE D'ANTENNE

(30) Priorität: 17.12.2012 DE 102012223470
(43) Veröffentlichungstag der Anmeldung: 21.10.2015
(73) Patentinhaber: Bundesdruckerei GmbH, 10969 Berlin (DE)
(72) Erfinder: FERBER, Alexander, 12105 Berlin (DE); MUTH, Oliver, 12277 Berlin (DE); KLOESER, Joachim, 10779 Berlin (DE)
(74) Vertreter: Ramrath, Lukas
(86) Internationale Anmeldenummer: PCT/EP2013/076493
(87) Internationale Veröffentlichungsnummer: WO 2014/095606

(56) Entgegenhaltungen:
- DE-A1-102010 028 444
- US-A1- 2008 125 994

## Beschreibung

Die Erfindung betrifft ein Verfahren und eine Vorrichtung zur Herstellung eines Wert- und/oder Sicherheitsdokuments mit einer Antennenstruktur.

Es sind bereits Wert- und/oder Sicherheitsdokumente bekannt, die eine kontaktlose Datenübertragungseinrichtung beinhalten. Zur Datenspeicherung und/oder Datenverarbeitung werden bereits seit längerer Zeit elektronische Bauelemente in das Dokument integriert, mit denen Daten gespeichert und/oder verarbeitet werden können.

Aus dem Stand der Technik sind hierbei Sicherheitsdokumente bekannt, die ein so genanntes Inlay oder eine so genannte Inlay-Lage beinhalten. Ein Inlay kann hierbei eine Trägerlage, z.B. eine als Trägerfolie ausgebildete Trägerlage, umfassen, die mit aktiven und passiven elektrischen oder elektronischen Bauelementen bestückt wird. Die WO 2011/003518 A1 beschreibt ein Verfahren zur Herstellung eines Inlays für einen Folienverbund, insbesondere ein Inlay für die Weiterverarbeitung zu einem Wert- oder Sicherheitsdokument, bei dem eine Trägerfolie mit mehreren darauf angeordneten und einander zugeordneten elektronischen Bauelementen einer Bilderfassungseinrichtung zugeführt wird, durch welche zumindest die Position von einem elektronischen Bauelement als Nutzen erfasst wird. Weiter wird eine auf die Trägerfolie aufzubringende lasersensitive Ausgleichsfolie zunächst einer Laserschneideinrichtung zugeführt. Weiter werden die Ausgleichsfolie mit den daran eingebrachten Aussparungen und das Trägermaterial in einer Zusammenführstation zusammengeführt und passergenau zueinander ausgerichtet zu einem Inlay fixiert. Hierbei wird mit der Laserschneideinrichtung zur Herstellung der Aussparungen, mit einer weiteren Laserschneideinrichtung oder mit einer Markierungseinrichtung für jeden Nutzen oder eine Gruppe von Nutzen eine Steuermarke auf die Ausgleichsfolie in Abhängigkeit von der jeweiligen erfassten Position des elektronischen Bauelements auf der Trägerfolie aufgebracht.

Die US 2008/125994 A1 offenbart ein Verfahren und eine Vorrichtung, um eine Bahn von RFID-Tags in RFID-Label umzuwandeln.

Aus DE 10 2010 028 444 A1 geht ein Dokument mit einem Chip und einer Antenne zur induktiven Einkopplung von Energie hervor. Die Antenne dieses Dokuments weist eine äußere Windung, zumindest eine mittlere Windung und eine innere Windung auf, wobei die mittlere Windung zwischen der äußeren und der inneren Windung angeordnet ist und der Chip mit der äußeren und der inneren Windung in elektrischem Kontakt steht. Die mittlere Windung überbrückt den Chip in einem Überbrückungsbereich der Antenne. Die Antenne ist spiralförmig ausgebildet. Der Chip ist in Flip-Chip-Technik über den Antennenwindungen montiert. Die Antennenwindungen können im Chipbereich eine geringere Breite aufweisen als im übrigen Bereich der Windungen.

Die Aufbringung von Antennenstrukturen auf einen Trägerkörper eines Wert- und/oder Sicherheitsdokuments kann beispielsweise mit einem Druckverfahren erfolgen. Hierbei wird eine Antennenstruktur mittels einer Leitpaste auf den Trägerkörper aufgedruckt. Die Qualität und die Gleichmäßigkeit des Antennendrucks sind entscheidend für die spätere Funktionsfähigkeit des Wert- und/oder Sicherheitsdokuments.

Problematisch ist, dass die Beurteilung oder Kontrolle einer Qualität der Aufbringung der Antennenstruktur im Herstellungsprozess des Wert- und/oder Sicherheitsdokuments schwierig und zeitaufwändig ist. Eine visuelle Bewertung mittels eines Lichtmikroskops ergibt nur einen nicht-quantifizierbaren Eindruck, der aufgrund des Reflexionsverhaltens der Antennenstruktur schwierig zu beurteilen ist. Messverfahren, die eine Oberflächentopographie erfassen, z.B. Laserinterferometrie oder Konfokalmessung, sind zeitaufwändig und können z.B. Lufteinschlüsse in der Antennenstruktur nicht detektieren.

Derartige Lufteinschlüsse waren bisher nur unter Anwendung von zerstörenden Verfahren, z.B. Schleifverfahren, detektierbar.

Es stellt sich das technische Problem, ein Verfahren und eine Vorrichtung zur Herstellung eines Wert- und/oder Sicherheitsdokuments mit einer Antennenstruktur zu schaffen, wobei ein aufgrund einer mangelhaften Antennenstruktur gebildeter Ausschuss im Herstellungsprozess, insbesondere auch in der Aufbringung der Antennenstruktur nachfolgenden Prozessschritten, vermindert wird.

Vorgeschlagen wird ein Verfahren zur Herstellung eines Wert- und/oder Sicherheitsdokuments mit einer Antennenstruktur.

Das Wert- und/oder Sicherheitsdokuments kann beispielsweise als Smartcard oder Identifikationsdokument ausgebildet sein. Beispielsweise kann das Dokument ein Personalausweis, Reisepass, Zugangsausweis, Führerschein, Fahrzeugbrief, Fahrzeugschein, Firmenausweis, Mitgliedsausweis, Skipass oder ein sonstiger Berechtigungsausweis, ein Ticket im öffentlichen Personen-Nahverkehr, eine Banknote, Kreditkarte, Scheckkarte, Barzahlungskarte, Eintrittskarte, Bonuskarte, Identifikationskarte, ein Visum oder dergleichen sein. Das Dokument kann in Form einer Karte mit einer Vorderseite und einer Rückseite vorliegen oder als buchartiges Dokument ausgebildet sein. Es kann im Wesentlichen aus Papier oder auch aus Kunststoff hergestellt sein. Im Falle eines Personalausweises trägt dessen Vorderseite zum Beispiel das Lichtbild sowie den Namen des Inhabers. Die Rückseite kann weitere Angaben enthalten, beispielsweise die Anschrift des Inhabers. Das Dokument kann als Transponder, insbesondere als passiver Transponder, beispielsweise als RFID-Sicherheitsdokument, ausgebildet sein.

Das Wert- und/oder Sicherheitsdokument kann hierbei eine kontaktlose Datenübertragungseinrichtung beinhalten. Diese kontaktlose
Datenübertragungseinrichtung weist hierbei die mindestens eine Antennenstruktur und ein elektronisches Bauelement auf, welches elektrisch mit der Antennenstruktur verbunden ist.

Hierbei werden unter einem elektronischen Bauelement insbesondere Halbleiterchips verstanden, insbesondere solche, welche zur Speicherung und Verarbeitung von Daten geeignet sind. Insbesondere können die elektronischen Bauelemente elektronische Halbleiterschaltungselemente sein. Die elektronischen Bauelemente umfassen insbesondere sogenannte RFID-Chips, welche zur kontaktlosen Kommunikation geeignet sind. RFID-Chips können vergleichsweise einfach sein, z.B. nur eine Seriennummer enthalten und diese bei Aktivierung kontaktlos übermitteln, oder es kann sich um Speicherchips mit Verschlüsselung handeln, wie diese zum Beispiel in elektronischen Reisedokumenten eingesetzt werden. Zur Datenkommunikation mit externen Geräten kann beispielsweise eine Kontaktfeldmatrix mit mehreren Kontaktfeldern gemäß ISO 7816 dienen, die mit dem Chip verbunden sind und die beim Verwenden des Dokuments, beispielsweise einer Karte, über Ein- und Ausgabegeräte einen elektrischen Kontakt zu externen Datenquellen und -speichern herstellen. Gemäß einer Weiterentwicklung von derartigen Wert- und/oder Sicherheitsdokumenten stehen auch kontaktlose Dokumente zur Verfügung, die ebenfalls elektronische Bauelemente zur Datenspeicherung und - verarbeitung enthalten und die über Ein- und Ausgabegeräte für den Datenaustausch mit externen Datenquellen zusätzlich über eine Antenne verfügen. Daten werden in diesem Falle mittels eines Schreib-/Lesegerätes mit den Bauelementen in dem Dokument dadurch ausgetauscht, dass das Schreib-/Lesegerät ein elektromagnetisches Wechselfeld mit einer Trägerfrequenz typischerweise im Radiowellenbereich erzeugt, das von der Antenne im Dokument detektiert und in elektrische Signale umgewandelt wird, die an das Bauelement weitergeleitet werden. Zur Ausgabe von von dem Dokument ausgehenden Daten erzeugt die Antenne ein entsprechendes elektromagnetisches Wechselfeld, das von dem Schreib-/Lesegerät detektiert wird. Derartige Transponder oder RFID-(radio frequency identification) Systeme sind ebenfalls seit einiger Zeit bekannt. Eine kontaktlose Kommunikation kann beispielsweise gemäß ISO 14443 erfolgen.

Es ist eine Grundidee der Erfindung, dass während des Verfahrens zur Herstellung eine durchleuchtungsbildbasierte Qualitätsprüfung der Antennenstruktur erfolgt, wobei eine Intensitätswertverteilung oder mindestens ein Parameter dieser Verteilung für Bildbereiche bestimmt werden, in die zumindest ein Abschnitt der Antennenstruktur abgebildet ist.

Das erfindungsgemäße Verfahren umfasst folgende Verfahrensschritte:

### 1. Bereitstellen eines Trägerkörpers

Der Trägerkörper kann z.B. als Kunststofflage ausgebildet sein. Insbesondere kann der Trägerkörper ein elektrisch isolierender Trägerkörper sein.

Die Kunststofflage bzw. mehrere oder alle Lagen des Dokuments kann/können aus einem Polymer, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid

(PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier, hergestellt werden. Außerdem kann das Dokument oder die Kunststofflage auch aus mehreren dieser Materialien hergestellt sein. Bevorzugt besteht die Kunststofflage oder das Dokument aus PC oder PC/TPU/PC. Die Polymere können entweder ungefüllt oder gefüllt vorliegen. Im ersten Falle (ungefüllt) sind sie vorzugsweise transparent oder transluzent. Falls die Polymere (zweiter Fall) gefüllt sind, sind sie opak. Das Füllmaterial kann beispielsweise ein Pigment sein oder ein Füllmaterial, das eine besonders hohe oder eine besonders niedrige Dielektrizitätskonstante aufweist. Durch eine geeignete Wahl des Füllmaterials können die elektrischen Eigenschaften des Schaltkreiselements beeinflusst werden. Bevorzugt wird das Dokument aus 3 bis 12, vorzugsweise 4 bis 10 Kunststofflagen (einschließlich des Trägerkörpers der Datenübertragungseinrichtung), die z.B. als Folien ausgebildet sind, hergestellt.

Ein die Kunststofflage enthaltendes Dokument kann aus diesen Materialien insbesondere durch Lamination hergestellt werden. Typischerweise wird die Lamination von PC in einer Laminierpresse bei 170 bis 200 °C und einem Druck von 50 bis 600 N/cm² hergestellt.

### 2. Aufbringen einer Antennenstruktur auf den Trägerkörper

Die Antennenstruktur kann als ein auf dem Trägerkörper angeordnetes Schaltkreiselement ausgebildet sein, das einen durchgehenden Antennen-Leiterzug in Form mindestens einer Spiralwindung, beispielsweise von einer, zwei, drei, vier, fünf, sechs, sieben, acht oder noch mehr Spiralwindungen, und jeweils einen Anschlusskontakt zur elektrischen Kontaktierung eines elektronischen Bauelements aufweist. Anschlusskontakte können hierbei an den Enden des Antennen-Leiterzuges angeordnet sein. Es ist jedoch auch möglich, dass ein Anschlusskontakt entlang eines Verlaufs des Antennen-Leiterzuges und somit nicht am Ende des Antennen-Leiterzuges angeordnet ist, insbesondere wenn der Antennen-Leiterzug einen Blindleiterzug aufweist. Das Schaltkreiselement dient zur induktiven Einkopplung von Energie, die von einem Schreib-/Lesegerät erzeugt wird.

Die Antennenstruktur, insbesondere eine als Leiterzug ausgebildete Antennenstruktur, weist, insbesondere an dessen Enden, jeweils einen Anschlussbereich oder Anschlusskontakt auf, der im Montagebereich zur elektrischen Kontaktierung mit dem elektronischen Bauelement dient. Die Anschlusskontakte können aus demselben Material und mit derselben Verfahrenstechnik hergestellt sein wie die Antennenstruktur.

Das Aufbringen der Antennenstruktur kann durch Aufdrucken auf den Trägerkörper erfolgen, beispielsweise mittels Siebdruck, Tiefdruck oder Flexodruck, insbesondere auch einschließlich der Anschlussbereiche der Antennenstruktur. Die genannten Druckverfahren zeichnen sich hierbei durch einen verhältnismäßig hohen Farbauftrag aus. Hierdurch werden gedruckte Antennen mit einer vergleichsweise hohen Güte aufgrund eines vergleichsweise geringen elektrischen Widerstandes erreicht. Tiefdruck kann insbesondere in den Formen Stichtiefdruck oder Rastertiefdruck erfolgen. Siebdruck in Form von Bogensiebdruck oder Rollensiebdruck ist das bevorzugte Druckverfahren.

Wenn die Antennenstruktur mit einer Leitpaste oder einem Leitlack gebildet ist, kann der elektrische Widerstand der Antennenstruktur durch eine nachträgliche Kompression erniedrigt werden, etwa im Montagebereich des Chips. Dies kann insbesondere durch Ausüben eines Druckes mittels eines Stempels auf die Antennenstruktur erreicht werden.

Die Antennenstruktur ist vorzugsweise in einer Ebene des Dokuments gebildet, indem es auf dem Trägerkörper erzeugt ist. Dadurch kann das Schaltkreiselement in einem Arbeitsgang erzeugt werden.

Insbesondere kann die Antennenstruktur aus einer Leitpaste oder einem Leitlack hergestellt werden. Diese Technik ist einfach und damit kostengünstig realisierbar. Die Leitpaste oder der Leitlack enthält mindestens ein Polymer als Binder sowie mindestens ein Metall und/oder ein leitfähiges Metalloxid und/oder anderes leitfähiges Material in dem Polymer. Als leitfähiges Material kommen Kupfer, Silber, Gold, Eisen, Zink, Zinn oder Kohlenstoff, insbesondere Graphit, Singlewall- und/oder Multiwall-Nanotubes, Fullerene oder Graphene in Betracht. Als Metalloxide kommen ITO (Indium-Zinn-Oxid), IZO, FTO (Fluor-dotiertes Zinndioxid), ATO (Antimonoxid) in Betracht. Die Metalle/Metalloxide können in Form von Flakes, Nadeln, Pulver (insbesondere nanoskalig), Plättchen oder dergleichen vorliegen. Insbesondere liegen diese als aggregierte Partikel vor. Als ein anderes leitfähiges Material kommen leitfähige organische Materialien/Polymere, z.B. Polyanilin, PEDOT:PSS, in Betracht. Zur Erzeugung der Antennenstruktur mit der Leitpaste oder dem Leitlack kann eine Siebdrucktechnik eingesetzt werden, beispielsweise Bogendruck, oder ein Rolle-Rolle-Druckverfahren. Die Dicke der aufgedruckten Paste oder des Lacks kann insbesondere 1 µm bis 100 µm und besonders bevorzugt etwa 10 µm betragen. Die Leitpaste oder der Leitlack kann entweder einfach getrocknet werden oder mittels Wärme und/oder Bestrahlung mit elektromagnetischer Strahlung, beispielsweise UV-Strahlung, aushärtbar sein.

Verwendet werden können auch die Druckverfahren des Tiefdrucks, insbesondere Stichtiefdruck, auch Intaglio genannt, sowie Rastertiefdruck, Flachdruck, insbesondere Offset, Hochdruck, insbesondere Letterset, Durchdruck, insbesondere Siebdruck, Flexodruck oder Digitaldruckverfahren, insbesondere Inkjet. Bevorzugt sind Siebdruck, Tiefdruck sowie Flexodruck, besonders bevorzugt Siebdruck.

Alternativ kann die Antennenstruktur auch in einer anderen Technik hergestellt sein, beispielweise in einer Ätztechnik aus Aluminium oder Kupfer mittels eines Ätzresists oder in einem Pattern-Plating-Verfahren. Bei Pattern-Plating-Verfahren werden, ausgehend von einer Grundmetallisierung, beispielsweise aus Kupfer, mit einem Platingresist auf der Grundmetallisierung zunächst die Strukturen als Kanäle geformt. Dann wird zusätzliches Metall in den Kanälen galvanotechnisch abgeschieden. Nach dem Entfernen des Platingresists wird die Grundmetallisierung zwischen den Strukturen durch Ätzen entfernt.

Beispielsweise kann das Wert- und/oder Sicherheitsdokument mindestens zwei miteinander durch Laminieren verbundene Kunststofflagen aufweisen, wobei eine der Lagen eine kontaktlose Datenübertragungseinrichtung mit der Antennenstruktur bildet oder beinhaltet. Der Trägerkörper, insbesondere ein elektrisch isolierender Trägerkörper der Datenübertragungseinrichtung kann ebenfalls aus Kunststoff hergestellt sein. Alternativ kann das Dokument auch durch Vergießen der elektronischen Komponenten (kontaktlose Datenübertragungseinrichtung mit Chip und Antenne) in Kunststoff hergestellt sein.

### 3. Erzeugen eines Durchleuchtungsbildes zumindest eines Abschnitts der Antennenstruktur

Hierbei kann von dem Trägerkörper und der darauf angeordneten Antennenstruktur ein Durchleuchtungsbild erzeugt werden.

Das Durchleuchtungsbild kann z.B. röntgenbasiert erzeugt werden, wobei eine Röntgeneinrichtung ein Röntgenbild von dem Trägerkörper und der darauf aufgebrachten Antennenstruktur erzeugt. Die Röntgeneinrichtung kann beispielsweise eine mobile Röntgeneinrichtung sein, wobei die Röntgeneinrichtung derart relativ zu dem Trägerkörper bewegt wird, dass ein vorbestimmter Zielbereich des Trägerkörpers abgebildet wird. Auch ist vorstellbar, dass die Röntgeneinrichtung eine ortsfest angeordnete Röntgeneinrichtung ist, wobei z.B. eine Positioniereinrichtung den Trägerkörper oder einen Bogen, der n x m Dokumente, also Trägerkörper mit jeweils aufgebrachten Antennenstrukturen, umfasst, derart relativ zur Röntgeneinrichtung positioniert, dass ein vorbestimmter Zielbereich eines jedes Dokuments abgebildet wird. Ist der mit einer Antennenstruktur bestückte Trägerkörper in einem Bogen von mehreren solcher Dokumente oder Nutzen enthalten, so kann das vorgeschlagene Verfahren sequenziell für verschiedene Teilbereiche eines Dokuments oder für mehrere, insbesondere alle, Dokumente des Bogens durchgeführt werden. Hierzu kann z.B. die vorhergehend erwähnte Positioniereinrichtung den Bogen sequenziell derart relativ zu der Röntgeneinrichtung positionieren, dass gewünschte Zielbereiche eines Dokuments oder verschiedener Dokumente abgebildet werden.

Das Durchleuchtungsbild kann ein pixelbasiertes Durchleuchtungsbild sein, welches z.B. a x b Pixel umfasst. Jedem Pixel kann hierbei mindestens ein Intensitätswert, insbesondere ein Grauwert, bei der Bilderzeugung zugeordnet werden. Wird ein Farbbild erzeugt, z.B. ein RGB-Bild, so können Durchleuchtungsbilder in verschiedenen Farbkanälen erzeugt werden, deren Pixel wiederum Intensitätswerte der einzelnen Farben zugeordnet werden. Wird das Durchleuchtungsbild röntgenbasiert erzeugt, so werden z.B. Bereiche des Trägerkörpers, die verhältnismäßig wenig Röntgenstrahlung absorbieren, hell, also mit einem hohen Grauwert, dargestellt. Entsprechend werden Bereiche, die viel Röntgenstrahlung absorbieren, dunkel, also mit einem niedrigen Grauwert, dargestellt.

Das Durchleuchtungsbild kann, wie vorhergehend erwähnt, in einer Durchleuchtungseinrichtung aufgenommen werden, in welcher eine Durchleuchtungsquelle, bevorzugt eine Röntgenquelle, sowie ein Detektor, bevorzugt ein Zeilendetektor, ortsfest angeordnet sind. Der Trägerkörper kann in diesem Fall in einen Erfassungsbereich der Durchleuchtungseinrichtung eingebracht oder durch den Erfassungsbereich hindurchgeführt werden, z.B. durch eine Positioniereinrichtung zur Positionierung des Trägerkörpers oder einen den Trägerkörper umfassenden Bogen. Insbesondere kann der Trägerkörper derart in den Erfassungsbereich eingebracht werden oder durch den Erfassungsbereich hindurchgeführt werden, dass der Trägerkörper zeilenweise abgebildet werden kann. In diesem Fall arbeitet die Durchleuchtungseinrichtung nach dem Prinzip eines Zeilenscanners. Zeilenweise kann z.B. bedeuten, dass eine Abbildung von einem Teilbereich des Trägerkörpers in eine eindimensionale Reihenfolge von Bildpunkten (Zeile) erfolgt, beispielsweise von einem rechteckigen Teilbereich, dessen Längsachse quer zu einer Transportrichtung des Trägerkörpers orientiert ist. Hierbei werden durch Transport des Trägerkörpers in Transportrichtung Teilbereiche, die in Transportrichtung benachbart sind, in verschiedene Zeilen abgebildet. Der rechteckige Teilbereich kann hierbei eine größere Dimension entlang der Längsrichtung als in Transportrichtung aufweisen. Dies ermöglicht in vorteilhafter Weise eine gute Einbindung der Erzeugung des Durchleuchtungsbildes in einen kontinuierlichen Herstellungsprozess und ist daher bevorzugt.

Da die Antennenstruktur aus einem Material ausgebildet ist, welches verhältnismäßig viel Röntgenstrahlung absorbiert, sind Bildbereiche, in die die Antennenstruktur abgebildet ist, in Relation zu anderen Bildbereichen, die z.B. Bereiche des Trägerkörpers ohne Antennenstruktur abbilden, mit niedrigen Grauwerten dargestellt, was eine gute Erkennbarkeit der Antennenstruktur gewährleistet.

### 4. Bestimmen zumindest eines Bildbereiches, in dem der zumindest eine Abschnitt der Antennenstruktur oder ein Teil des Abschnitts abgebildet ist

Hierbei erfolgt eine Segmentierung von einem oder mehreren Bildbereichen, in den/die die Antennenstruktur oder ein Teil davon abgebildet ist/sind.

Hierfür kann eine Vielzahl von existierenden Segmentierungsverfahren angewendet werden. So kann z.B. ein intensitätswertbasiertes Segmentierverfahren angewendet werden, wobei in einem intensitätswertbasierten Segmentierverfahren eine Zerlegung des Bildes in Bildbereiche in Abhängigkeit der Intensitätswerte der einzelnen Pixel durchgeführt wird. Beispielsweise kann eine histogrammbasierte Segmentierung durchgeführt werden. Auch können Segmentierungsverfahren entsprechend so genannter Homogenitätskriterien durchgeführt werden, wobei Bildbereiche zusammengefasst werden, in denen eine Intensitätswertverteilung vorbestimmten Homogenitätskriterien entspricht. Auch können Segmentierungsverfahren nach so genannten Diskontinuitätskriterien durchgeführt werden, insbesondere kantenbasierte Segmentierungsverfahren. Hierbei können Kantenpixel als lokale Maxima in Gradientenrichtung bzw. Nulldurchgänge einer zweiten Ableitung eines Intensitätswertverlaufs detektiert werden. Ein Segment kann z.B. als von Kantenpixeln oder zu von Kantenzügen zusammengefassten Kantenpixeln eingeschlossener Bildbereich bestimmt werden.

Das Bestimmen des Bildbereiches, in dem die Antennenstruktur oder ein Teil davon abgebildet ist, kann auch in Abhängigkeit vorbekannter geometrischer Dimensionen und/oder Verläufe der Antennenstruktur erfolgen. Umfasst die Antennenstruktur z.B. mehrere parallel verlaufende Leiterzüge, so können Bildbereiche detektiert werden, deren Kantenzüge parallel oder annähernd parallel verlaufen, wobei die von den Kantenzügen eingeschlossenen Bildbereiche z.B. niedrige Intensitätswerte aufweisen. Auch ist möglich, dass ein Suchbereich im Durchleuchtungsbild in Abhängigkeit vorbekannter geometrischer Referenzstrukturen des Trägerkörpers bestimmt wird. Ist eine geometrische relative Lage und/oder Ausrichtung von Antennenstrukturen zu den Referenzstrukturen bekannt, so kann ein Suchbereich in Abhängigkeit dieser vorbekannten relativen Lage und/oder Orientierung definiert werden, wobei die Segmentierung dann, z.B. ausschließlich, in dem Suchbereich durchgeführt wird.

Auch kann das Bestimmen zumindest eines Bildbereiches oder des vorhergehend erläuterten Suchbereiches in Abhängigkeit von Erfahrungswerten erfolgen, die z.B. in vorhergehenden Verfahren gewonnen und gespeichert wurden. So kann z.B. in vorhergehenden Verfahren gespeichert werden, in welchem Teilbereich des Bildes die jeweilige gesuchte Antennenstruktur abgebildet wurde. Ein Suchbereich in einem aktuell erzeugten Durchleuchtungsbild kann dann in Abhängigkeit der Lage und/oder Orientierung dieser vorbekannten Teilbereiche bestimmt werden.

### 5. Bestimmen mindestens eines Parameters einer Intensitätswertverteilung in dem zumindest einen Bildbereich

Der Bildbereich, der in dem vorhergehend erläuterten Verfahrensschritt bestimmt wurde, umfasst in der Regel mehrere Pixel. In diesem Verfahrensschritt erfolgt die Bestimmung der Intensitätswerte aller Pixel dieses Bildbereichs und z.B. eines Mittelwerts oder einer Standardabweichung der von diesen Intensitätswerten gebildeten Intensitätswertverteilung.

Auch kann ein segmentierter Bildbereich in mehrere Teilbereiche unterteilt werden, wobei für jeden Teilbereich mindestens ein Parameter einer Intensitätswertverteilung von Intensitätswerten der Pixel dieses Teilbereichs bestimmt wird. Hierdurch kann ein räumlicher Verlauf von dem mindestens einen Parameter bestimmt werden.

Wie nachfolgend näher erläutert, erlauben Eigenschaften der Intensitätsverteilung Rückschlüsse auf eine Qualität, insbesondere eine Schichtdicke, der aufgebrachten Antennenstruktur.

### 6. Auswerten eines parameterabhängigen Qualitätskriteriums

Ein Qualitätskriterium kann z.B. erfüllt sein, wenn der vorbestimmte Parameter kleiner als ein vorbestimmter Schwellwert oder größer als ein vorbestimmter Schwellwert ist oder in mindestens einem vorbestimmten Bereich liegt. Ist das Qualitätskriterium nicht erfüllt, so kann der Trägerkörper mit der aufgebrachten Antennenstruktur als Ausschuss klassifiziert werden. In diesem Fall kann z.B. der entsprechende Trägerkörper aussortiert werden, wobei er nachfolgende Prozessschritte des Herstellungsverfahrens, beispielsweise eine Bestückung mit einem elektronischen Bauelement, nicht mehr durchläuft. Ist das Qualitätskriterium erfüllt, so kann der Trägerkörper mit der Antennenstruktur nachfolgende Prozessschritte durchlaufen.

Das vorgeschlagene Verfahren ermöglicht in vorteilhafter Weise eine einfache und zuverlässige Qualitätskontrolle von Antennenstrukturen, die auf einen Trägerkörper während der Herstellung eines Wert- und/oder Sicherheitsdokuments aufgebracht wurden. Da gemäß dem vorgeschlagenen Verfahren ein Durchleuchtungsbild erzeugt wird, können nicht ausschließlich unregelmäßige Verläufe einer Oberfläche der Antennenstruktur detektiert werden, sondern auch z.B. Lufteinschlüsse in der Antennenstruktur.

Insgesamt wird somit der gesamte Herstellungsprozess des Wert- und/oder Sicherheitsdokuments verbessert und eine Anzahl von Ausschuss bildenden Wert- und/oder Sicherheitsdokumenten, insbesondere in nachfolgenden Prozessschritten, verringert.

Gleichzeitig zur Bestimmung eines Bildbereiches, in dem der zumindest eine Abschnitt der Antennenstruktur oder ein Teil des Abschnittes abgebildet ist, kann auch mindestens ein Bildbereich bestimmt werden, in den kein Abschnitt der Antennenstruktur abgebildet ist. Diese können z.B. zur Bestimmung eines Referenzintensitätswertes dienen. Dies wird nachfolgend näher erläutert.

Das Verfahren kann insbesondere in einem unbestückten und unlaminierten Zustand angewendet werden. Ein unbestückter Zustand bezeichnet hierbei einen Zustand des Trägerkörpers, in dem noch kein elektronisches Bauelement auf den Trägerkörper aufgebracht ist. Ein unlaminierter Zustand bezeichnet hierbei einen Zustand des Trägerkörpers, in dem der Trägerkörper mit der Antennenstruktur noch nicht laminiert wurde.

In einer weiteren Ausführungsform wird/werden ein Mittelwert und/oder eine Standardabweichung der Intensitätswertverteilung bestimmt.

Hierbei korreliert der Mittelwert mit einer Schichtdicke der Antennenstruktur, wobei die Schichtdicke relativ zu einer Oberfläche des Trägerkörpers definiert wird, auf der die Antennenstruktur aufgebracht ist. Die Schichtdicke ist hierbei abhängig von einer Höhe der Antennenstruktur über dieser Oberfläche und/oder von einer Anzahl und Größe von Lufteinschlüssen in der Antennenstruktur.

Ein im Verhältnis hoher Mittelwert bedeutet hierbei, dass die abgebildete Antennenstruktur im Verhältnis wenig Röntgenstrahlung absorbiert. Somit kann geschlossen werden, dass die Antennenstruktur eine geringe Schichtdicke aufweist.

Hierbei ist es möglich, dass der Mittelwert als Differenz zwischen einem Mittelwert der absoluten Intensitätswerte in dem zumindest einen Bildbereich und einem Referenzintensitätswert bestimmt wird. Der Referenzintensitätswert wird insbesondere als Mittelwert von Intensitätswerten eines Bildbereiches des Durchleuchtungsbildes bestimmt, in den keine Antennenstrukturen oder weitere Strukturen abgebildet sind. Insbesondere kann, wie vorhergehend bereits erläutert, ein Referenzbereich bestimmt werden, wobei der Referenzintensitätswert als Mittelwert der Intensitätswertverteilung von Intensitätswerten der Pixel dieses Referenzbereiches bestimmt wird. Dieser Referenzintensitätswert korreliert zur Absorption von Röntgenstrahlung ausschließlich durch den Trägerkörper. Um eine Schichtdicke der Antennenstruktur in Relation zur der Oberfläche dieses Trägerkörpers zu bestimmen, ist die vorhergehend erläuterte Differenzbildung notwendig. Diese Differenzbildung entspricht hierbei einem Weißabgleich oder einer Nominalbestimmung.

Der Referenzbereich kann hierbei als ein Bildbereich bestimmt werden, dessen Mittelwert der Intensitätswertverteilung größer als ein vorbestimmter Schwellwert ist und dessen Standardabweichung kleiner als ein vorbestimmter Schwellwert ist. Die Schwellwerte können hierbei derart gewählt werden, dass sichergestellt wird, dass ein möglichst homogener und heller Bereich als Referenzbereich bestimmt wird, in den keine Antennenstruktur abgebildet ist.

Alternativ oder kumulativ kann der Referenzbereich in Abhängigkeit einer Lage und/oder Orientierung von vorbekannten Referenzstrukturen im Durchleuchtungsbild bestimmt werden. Ist z.B. bekannt, dass in einer vorbestimmten relativen Lage und/oder Orientierung zu den Referenzstrukturen keine Antennenstrukturen auf dem Trägerkörper angeordnet sind, so kann im Durchleuchtungsbild die Lage des Referenzbereichs in entsprechenden Bildbereichen festgelegt werden.

Die Bestimmung eines Referenzintensitätswerts erlaubt hierbei in vorteilhafterweise, dass eine Variation der Strahlungsintensitäten und/oder eine Detektordrift eines Detektors der Röntgeneinrichtung ausgeglichen werden können.

Die Standardabweichung korreliert mit Schichtdickenschwankungen der Antennenstruktur und/oder einer Größe und Anzahl von Lufteinschlüssen. Eine im Verhältnis große Standardabweichung bedeutet beispielsweise, dass z.B. eine Oberfläche der Antennenstruktur starke Schwankungen, insbesondere Erhebungen oder Vertiefungen, aufweist.

Es ist möglich, die Standardabweichung nur bezüglich von Intensitätswerten auszuwerten, die größer als der Mittelwert sind. Dieser Teil der Standardabweichung korrespondiert zu einem Anteil an fehlendem Material in der Antennenstruktur. Ein Teil der Standardabweichung, der die Werte, die kleiner als der Mittelwert sind, umfasst, korrespondiert zu einem Anteil der Antennenstruktur, der zu viel Material aufweist. Hierbei ist das Fehlen von Material kritischer zu beurteilen und wirkt sich somit stärker auf die Qualität der Antennenstruktur aus als Bereiche mit zu viel Material. Somit wird bevorzugt dieser Bereich ausgewertet.

Das Qualitätskriterium ist beispielsweise nicht erfüllt, wenn der Mittelwert der Intensitätswertverteilung außerhalb eines vorbestimmten Referenzbereiches liegt und/oder wenn eine Standardabweichung der Intensitätswertverteilung größer als eine vorbestimmte Referenzabweichung ist. Liegt z.B. der Mittelwert außerhalb des vorbestimmten Referenzbereiches, so kann davon ausgegangen werden, dass die Schichtdicke zu hoch oder zu niedrig ist. Ist die Standardabweichung der Intensitätswertverteilung größer als eine vorbestimmte Referenzabweichung, so kann davon ausgegangen werden, dass z.B. eine obere Oberfläche der Antennenstruktur zu starke Oberflächenschwankungen aufweist. In Abhängigkeit der Standardabweichung kann ebenfalls erfasst werden, ob eine ungleichmäßige oder gleichmäßige Verteilung von Metallelementen, insbesondere Silberelementen, beispielsweise Silberkugeln, in einer Polymermatrix vorliegt, durch die z.B. die vorhergehend erwähnte Leitpaste gebildet wird. In einem durch Röntgenstrahlung erzeugten Durchleuchtungsbild ist der Kontrast zwischen der Masse nach schweren und leichten Elementen hoch, sodass effektiv nur die leitfähigen Bestandteile der Antennenstruktur, z.B. also die Silberelemente und deren Verteilung, erfasst werden können. Auf diese Weise kann zum Beispiel erkannt werden, ob die verwendete Druckfarbe für die Antennenstruktur, zum Beispiel durch eine unerwünschte Kumulation von Silberelementen, nicht mehr für einen qualitativ hochwertigen Druck geeignet ist.

Die Bestimmung von Mittelwert und/oder Standardabweichung erlaubt somit in vorteilhaftere Weise eine einfache Bestimmung einer Qualitätskenngröße, die einen hinsichtlich einer Qualität der Antennenstruktur aussagekräftigen Parameter darstellt.

Der vorbestimmte Referenzbereich oder die vorbestimmte Referenzabweichung kann z.B. durch Korrelation von Intensitätswerten des Durchleuchtungsbildes mit Ergebnissen weiterer Messmethoden, z.B. einer Laserinterferometrie, bestimmt werden. So ist z.B. vorstellbar, dass ein Zusammenhang zwischen einem Intensitätswert und einer tatsächlichen Höhe der Antennenstruktur über der Oberfläche des Trägerkörpers bestimmt wird, wobei die tatsächliche Höhe z.B. mittels eines optischen Systems, beispielsweise einem Nanofokus-System, bestimmt wird. Selbstverständlich können auch weitere Messmethoden zur Bestimmung der tatsächlichen Höhe angewendet werden.

In einer weiteren Ausführungsform umfasst die Antennenstruktur zumindest einen Leiterzug, wobei ein Bildbereich bestimmt wird, in den der mindestens eine Leiterzug oder ein Teil des Leiterzugs abgebildet ist, wobei mindestens ein Parameter einer Intensitätswertverteilung in dem mindestens einen Bildbereich bestimmt wird.

Der Bildbereich, in den der mindestens eine Leiterzug abgebildet ist, kann insbesondere über die vorhergehend erläuterte kantenbasierte Segmentierung bestimmt werden. Wird das Durchleuchtungsbild beispielsweise derart erzeugt, dass der Leiterzug sich von einem unteren Bildrand zu einem oberen Bildrand hin erstreckt, so weist ein Intensitätsverlauf entlang einer Zeile des Durchleuchtungsbildes oder eines Suchbereichs in Richtung aufsteigender Spaltenzahl, also von links nach rechts, einen Intensitätsabfall auf, der zu einer ersten, linken Kante des Leiterzuges korrespondiert, und nachfolgend einen Intensitätsanstieg auf, der zu einer zweiten, rechten Kante des Leiterzuges korrespondiert. In diesem Fall kann z.B. das Durchleuchtungsbild oder ein Suchbereich, insbesondere ein rechteckiger Suchbereich, des Durchleuchtungsbildes zeilenweise durchlaufen werden, wobei für jede Zeile ein Intensitätswertverlauf entlang dieser Zeile in aufsteigender Spaltenzahl bestimmt und in Abhängigkeit des Intensitätswertverlaufes Kanten der Antennenstruktur, insbesondere des Leiterzugs, bestimmt werden. Ein erster linker Kantenpixel kann z.B. bestimmt werden, wenn die Intensität unter einen vorbestimmten Schwellwert sinkt und/oder eine erste Ableitung des Intensitätswertverlaufs ein Maximum aufweist und/oder eine zweite Ableitung des Intensitätswertverlaufs einen Nulldurchgang aufweist. Entsprechend kann der zweite, rechte Kantenpixel detektiert werden, falls die Intensität über einen vorbestimmten Schwellwert steigt und/oder die erste Ableitung ein Maximum und/oder die zweite Ableitung ein Nulldurchgang aufweist.

Der Bildbereich zwischen von diesen Kantenpixeln gebildeten Kantenzügen bildet dann den Leiterzug ab. Selbstverständlich kann das Durchleuchtungsbild oder ein Suchbereich spaltenweise in aufsteigender Zeilenzahl durchlaufen werden, um z.B. horizontal verlaufende Kanten zu detektieren.

Dies ermöglicht in vorteilhafter Weise eine einfache Bestimmung eines Bildbereiches, in den der Leiterzug oder ein Teil davon abgebildet wird.

In einer weiteren Ausführungsform umfasst die Antennenstruktur einen ersten Abschnitt und mindestens einen weiteren Abschnitt, z.B. eine weitere Spiralwindung, wobei ein erster Bildbereich bestimmt wird, in dem der erste Abschnitt oder ein Teil des ersten Abschnitts abgebildet ist. Weiter wird ein weiterer Bildbereich bestimmt, in dem der weitere Abschnitt oder ein Teil des weiteren Abschnitts abgebildet ist. Weiter wird mindestens ein Parameter einer ersten Intensitätswertverteilung in dem ersten Bildbereich und mindestens ein Parameter einer weiteren Intensitätswertverteilung in dem weiteren Bildbereich bestimmt.

Selbstverständlich kann die Antennenstruktur mehr als zwei Abschnitte umfassen. Die Abschnitte können insbesondere räumlich voneinander getrennte Abschnitte sein. Die Abschnitte können hierbei im Durchleuchtungsbild parallel zueinander verlaufen. So ist vorstellbar, dass z.B. einzelne Spiralwindungen jeweils mehrere parallel verlaufende Windungsäste umfassen.

Auch ist vorstellbar, dass ein resultierender Parameter der Intensitätswertverteilungen bestimmt wird. Beispielsweise kann/können ein resultierender Mittelwert der Mittelwerte aller Intensitätsverteilungen und/oder ein resultierender Mittelwerte der Standardabweichungen aller Intensitätswertverteilungen bestimmt werden.

Ein Qualitätskriterium ist beispielsweise nicht erfüllt, wenn ein oder mehrere Mittelwerte bzw. Standardabweichungen der Intensitätswertverteilungen außerhalb eines vorbestimmten Referenzbereiches liegen oder der resultierende Parameter außerhalb des vorbestimmten Referenzbereiches liegt.

Auch kann das Qualitätskriterium in Abhängigkeit der Relation der Parameter der einzelnen Intensitätsverteilungen zueinander ausgewertet werden. Ein Qualitätskriterium ist beispielsweise dann nicht erfüllt, wenn die Mittelwerte der Intensitätswertverteilungen um mehr als ein vorbestimmtes Maß voneinander abweichen und/oder wenn die Standardabweichungen der Intensitätswertverteilungen um mehr als ein vorbestimmtes Maß voneinander abweichen.

Dies ermöglicht in vorteilhafter Weise die Auswertung eines Qualitätskriteriums ausschließlich auf Grundlage einer relativen Größe der Parameter von Bildbereichen, die einen Teil der Antennenstruktur abbilden.

In einer weiteren Ausführungsform wird ein weiterer Bildbereich bestimmt, in dem ein Zwischenraum zwischen benachbarten, aber räumlich getrennten, Abschnitten abgebildet ist, wobei mindestens ein Parameter einer Intensitätswertverteilung in dem weiteren Bildbereich bestimmt wird.

Z.B. verlaufen die erste und die weitere Spiralwindung benachbart zueinander. Somit können Bildbereiche der ersten und der weiteren Spiralwindung, wie vorhergehend erläutert, z.B. kantenbasiert segmentiert werden. Wird z.B. ein Suchbereich des Durchleuchtungsbildes zeilenweise durchlaufen, so können bei einem parallelen Verlauf der Spiralwindungen vier Kantenpixel detektiert werden. Zwischen einem zweiten, rechten Kantenpixel eines linken Leiterzuges und einem ersten, rechten Kantenpixel eines benachbarten Leiterzuges ist dann der vorhergehend erläuterte Zwischenraum abgebildet.

Das Qualitätskriterium kann dann alternativ oder kumulativ in Abhängigkeit des Parameters der Intensitätswertverteilung dieses Bildbereiches bestimmt werden. Das Qualitätskriterium ist beispielsweise nicht erfüllt, wenn ein Mittelwert der Intensitätswertverteilung außerhalb eines vorbestimmten Referenzbereiches und/oder eine Standardabweichung größer als eine vorbestimmte Standardabweichung ist. Hierbei liegt dieser vorbestimmte Referenzbereich des Mittelwertes des weiteren Bildbereichs jedoch bei höheren Intensitätswerten als der vorbestimmte Referenzbereich von Mittelwerten von Intensitätswertverteilungen in Bildbereichen, die Antennenstrukturen abbilden, da Zwischenräume in der Regel weniger Röntgenstrahlung absorbieren. Auch kann das Qualitätskriterium z.B. nicht erfüllt sein, wenn der Mittelwert kleiner als ein vorbestimmter Intensitätswert ist.

Liegt der Mittelwert außerhalb des Referenzbereiches oder ist der Mittelwert kleiner als der vorbestimmte Intensitätswert, so können sich beispielsweise Bereiche der Antennenstruktur in den Zwischenraum erstrecken. In diesem Fall kann die Antennenstruktur "verschmiert" worden sein. Derartige Verschmierungen, also Erstreckungen von Bereichen der Antennenstruktur in den Zwischenraum, erhöhen gleichzeitig auch die Standardabweichung der Intensitätswertverteilung des Bildbereiches, in dem der Zwischenraum zwischen Abschnitten der Antennenstruktur abgebildet ist. Hierdurch ergibt sich in vorteilhafter Weise ein weiteres, einfach zu bestimmendes Qualitätskriterium für eine Qualität der Antennenstruktur bzw. eine Qualität der Aufbringung der Antennenstruktur auf den Trägerkörper.

In einer weiteren Ausführungsform wird zusätzlich mindestens eine geometrische Dimension des mindestens einen Abschnitts der Antennenstruktur bestimmt.

Beispielsweise kann eine Breite der Antennenstruktur, beispielsweise eines Leiterzugs/der Leiterzüge, bestimmt werden. Die Breite kann hierbei pixelbasiert bestimmt werden. Z.B. kann eine Breite eines Leiterzuges als Anzahl von Pixeln bestimmt werden, die zwischen einem linken und einem rechten Kantenpixel in einer Bildzeile angeordnet sind. Alternativ oder kumulativ kann ein Abstand, insbesondere ein pixelbasierter Abstand, zwischen zwei benachbarten Abschnitten der Antennenstruktur bestimmt werden. Ein solcher Abstand kann beispielsweise als Anzahl von Pixeln, die zwischen einem rechten Randpixel eines ersten Leiterzuges und einem linken Randpixel eines in einer Bildzeile benachbarten Leiterzuges angeordnet sind, bestimmt werden.

Bezogen auf das Durchleuchtungsbild kann die Breite aber in horizontaler Richtung bestimmt werden. Selbstverständlich kann auch eine Höhe in Vertikalrichtung bestimmt werden.

Ein Qualitätskriterium ist beispielsweise dann nicht erfüllt, wenn die mindestens eine geometrische Dimension kleiner als eine vorbestimmte Dimension oder größer als eine vorbestimmte Dimension ist oder außerhalb eines vorbestimmten Dimensionsbereiches liegt.

Dies ermöglicht in vorteilhafter Weise eine weitere Überprüfung einer Qualität der Antennenstruktur.

In einer weiteren Ausführungsform wird eine Kantendetektion zur Bestimmung des zumindest einen Bildbereiches, in dem der zumindest eine Abschnitt der Antennenstruktur oder ein Teil des Abschnittes abgebildet ist, durchgeführt. Wie vorhergehend erläutert, kann eine Kantendetektion in Abhängigkeit eines Intensitätswertverlaufes entlang einer Bildlinie, z.B. einer Bildzeile, des gesamten Durchleuchtungsbildes oder eines Suchbereiches des Durchleuchtungsbildes erfolgen. Insbesondere kann die Kantendetektion fensterbasiert erfolgen, wobei die Fenstergröße eine Größe des vorhergehend erläuterten Suchbereiches bezeichnet. Die Fenstergröße kann hierbei in Abhängigkeit einer Bildgröße des abgebildeten und zu segmentierenden Abschnitts der Antennenstruktur gewählt werden. Vorzugsweise ist die Fenstergröße breiter als eine Breite des zu segmentierenden Abschnitts, jedoch kleiner als eine Summe dieser Breite und einer Breite eines Zwischenraums zwischen dem zu segmentierenden Abschnitt und einem benachbarten Abschnitt. Diese Ausführungen gelten selbstverständlich auch für eine Höhe des zu segmentierenden Abschnitts.

Die Kantendetektion zur Segmentierung von Bildbereichen ermöglicht hierbei in vorteilhafter Weise eine zuverlässige und robuste Bestimmung von Bildbereichen, in denen die Antennenstruktur oder ein Teil davon abgebildet ist, sowie von Bildbereichen, in denen z.B. Zwischenräume zwischen benachbarten Leiterzügen abgebildet sind.

In einer weiteren Ausführungsform wird das mindestens eine Qualitätskriterium in Abhängigkeit eines Vergleichs des mindestens einen Parameters der Intensitätswertverteilung eines Bildbereiches mit einem Referenzparameter oder in Abhängigkeit eines Vergleichs von Parametern von Intensitätswertverteilungen verschiedener Bildbereiche ausgewertet.

Wie vorhergehend erläutert, kann ein Referenzparameter, beispielsweise eine Referenzabweichung oder ein Referenzparameterbereich, in Abhängigkeit von Ergebnissen weiterer Messverfahren festgelegt werden, durch die ein z.B. funktioneller Zusammenhang zwischen einem Intensitätswert im Durchleuchtungsbild und einer tatsächlichen Höhe der Antennenstruktur festgelegt werden kann.

Ein Referenzparameter kann beispielsweise auch in Abhängigkeit einer abgebildeten Referenzstruktur bestimmt werden, deren Schichtdicke vorbekannt ist. Ist auf dem Trägerkörper beispielsweise eine Referenzstruktur oder ein Referenzelement angeordnet, dessen Schichtdicke und sonstigen Absorptionseigenschaften vorbekannt sind, so kann in Abhängigkeit von Intensitätswerten eines Bildbereiches, in dem die Referenzstruktur oder das Referenzelement abgebildet ist, eine Skalierung der weiteren Intensitätswerte des Durchleuchtungsbildes durchgeführt werden. Hierdurch kann in vorteilhafter Weise eine Bestimmung von tatsächlichen Höhen der Antennenstruktur erfolgen.

Wie ebenfalls vorhergehend erläutert, können auch korrespondierende Parameter verschiedener Bildbereiche, z.B. Mittelwerte und/oder Standardabweichungen von Bildbereichen, die verschiedene Abschnitte der Antennenstruktur, z.B. verschiedene Spiralwindungen der Antennenstruktur, abbilden, miteinander verglichen werden.

Es können auch resultierende Parameter verschiedener Dokumente verglichen werden. Hierzu können für ein Dokument, also für einen Trägerkörper mit einer aufgebrachten Antennenstruktur, für jeden Bildbereich, in den die Antennenstruktur oder ein Teil davon abgebildet ist, Parameter bestimmt werden, wobei ein resultierender Parameter in Abhängigkeit dieser Anzahl von Parametern bestimmt wird. Wird dies für mehrere Dokumente durchgeführt, so kann dann ein Qualitätskriterium in Abhängigkeit eines Vergleichs der resultierenden Parameter eines jeden Dokuments ausgewertet werden. Dies erlaubt z.B. den Vergleich resultierender Parameter von Dokumenten eines Bogens, wobei ein Bogen n x m Dokumente umfasst. Auch erlaubt dies den Vergleich von resultierenden Parametern von Dokumenten verschiedener Bögen.

Dies ermöglicht in vorteilhafter Weise eine weitere Verbesserung der Qualitätskontrolle.

In einer weiteren Ausführungsform umfasst das Verfahren folgende Verfahrensschritte:
1. Bereitstellen eines ersten Trägerkörpers,
2. Aufbringen einer ersten Antennenstruktur auf den ersten Trägerkörper in Abhängigkeit mindestens eines antennenspezifischen Aufbringparameters.
   Der Aufbringparameter bezeichnet hierbei einen Parameter, der die Steuerung der Aufbringung der Antennenstruktur erlaubt. Wird beispielsweise ein Siebdruckverfahren zur Aufbringung der Antennenstruktur durchgeführt, so kann der mindestens eine antennenspezifische Aufbringparameter beispielsweise eine Siebart, eine Rakelgeschwindigkeit, eine Rakelhärte, einen Rakelwinkel, einen Siebabsprung, eine Gewebedicke, eine Emulsionsdicke oder eine Druckgeschwindigkeit bezeichnen. Der Siebabsprung bezeichnet hierbei einen Abstand zwischen einer Siebunterkante und einer Druckgutoberkante. Auch kann eine Stillstandsdauer während eines Druckverfahrens und/oder einer Trocknungsdauer und/oder einer Trocknungstemperatur, von der eine Qualität der Siebdruckpaste abhängig ist, den mindestens einen antennenspezifischen Aufbringparameter bilden.
3. Erzeugen eines Durchleuchtungsbildes zumindest eines Abschnitts der ersten Antennenstruktur,
4. Bestimmen zumindest eines Bildbereiches, in dem der zumindest eine Abschnitt der ersten Antennenstruktur oder ein Teil des Abschnittes abgebildet ist,
5. Bestimmen mindestens eines Parameters einer Intensitätswertverteilung in dem zumindest einen Bildbereich,
6. Bereitstellen eines weiteren Trägerkörpers,
7. Aufbringen einer weiteren Antennenstruktur auf den weiteren Trägerkörper in Abhängigkeit des mindestens einen antennenspezifischen Aufbringparameters, wobei der antennenspezifische Aufbringparameter in Abhängigkeit des mindestens einen Parameters der Intensitätswertverteilung bestimmt wird.

Das Bereitstellen des weiteren Trägerkörpers erfolgt hierbei entsprechend den Erläuterungen zur Bereitstellung des ersten Trägerkörpers (Schritt 1 des vorgeschlagenen Verfahrens).

Hierbei wird/werden also der antennenspezifische Aufbringparameter oder mehrere antennenspezifische Aufbringparameter in Abhängigkeit des mindestens einen Parameters der Intensitätswertverteilung eingestellt. Dies erlaubt eine Rückkopplung des Parameters und somit eine Regelung des Aufbringverfahrens in Abhängigkeit des erfindungsgemäß bestimmten Parameters der Intensitätswertverteilung, was auch als Nachregelung bezeichnet werden kann. Hierdurch kann ein Herstellungsprozess weiter verbessert werden. Insbesondere können frühzeitig unerwünschte Abweichungen in der Qualität der Antennenstruktur, z.B. unerwünschte Abweichungen in der Schichtdicke der Antennenstruktur und/oder in der Breite der Antennenstruktur, detektiert werden, wobei der mindestens eine antennenspezifische Aufbringparameter derart geändert wird, dass die unerwünschte Abweichung reduziert oder minimiert wird.

Zu beachten ist, dass die vorhergehend beschriebene Regelung des Herstellungsprozesses in Abhängigkeit des erfindungsgemäß bestimmten Parameters der Intensitätswertverteilung unabhängig von einer Auswertung des Qualitätskriteriums erfolgen kann. Bevorzugt erfolgt eine Veränderung des mindestens einen antennenspezifischen Aufbringparameters dann, wenn das Dokument, für welches der mindestens eine Parameter der Intensitätswertverteilung bestimmt wurde, zwar noch keinen Ausschuss bildet, jedoch eine bereits eine Abweichung, die z.B. größer als eine vorbestimmte Abweichung ist, von einem idealen Soll-Parameter detektiert wird.

Hierbei kann z.B. ein optimaler Wertebereich des Parameters der Intensitätswertverteilung definiert sein, wobei keine Veränderung des mindestens einen antennenspezifischen Aufbringparameters erfolgt und das Qualitätskriterium erfüllt ist, wenn der aktuell bestimmte Parameter in diesem Bereich liegt. In diesem Fall bildet das Dokument keinen Ausschuss und es ist keine Nachregelung erforderlich.

Weiter kann z.B. ein vom optimalen Wertebereich verschiedener Grenzbereich des Parameters der Intensitätswertverteilung definiert sein, wobei eine Veränderung des mindestens einen antennenspezifischen Aufbringparameters erfolgt, das Qualitätskriterium jedoch trotzdem erfüllt ist, wenn der aktuell bestimmte Parameter in diesem Bereich liegt. Auch in diesem Fall bildet das Dokument keinen Ausschuss, jedoch wird bereits eine Nachregelung durchgeführt.

Weiter kann z.B. ein vom optimalen Wertebereich und vom Grenzbereich verschiedener Ausschussbereich des Parameters der Intensitätswertverteilung definiert sein, wobei eine Veränderung des mindestens einen antennenspezifischen Aufbringparameters erfolgt und das Qualitätskriterium nicht erfüllt ist, wenn der aktuell bestimmte Parameter in diesem Bereich liegt. In diesem Fall bildet das Dokument Ausschuss.

Hierdurch ergibt sich in vorteilhafter Weise eine Regelung des Herstellungsprozesses in Abhängigkeit des mindestens einen Parameters der Intensitätswertverteilung, wodurch die Herstellungsgüte weiter verbessert und der Ausschuss weiter minimiert werden kann. Insbesondere wird eine frühzeitige Erkennung von unerwünschten Abweichungen detektiert und in den Herstellungsprozess rückgekoppelt, sodass eine Anpassung der Aufbringung der Antennenstruktur bereits vor dem Entstehen von Ausschuss erfolgt.

Weiter vorgeschlagen wird eine Vorrichtung zur Herstellung eines Wert- und/oder Sicherheitsdokuments mit einer Antennenstruktur. Die Vorrichtung umfasst mindestens eine Aufbringeinrichtung, eine Durchleuchtungseinrichtung und mindestens eine Auswerteeinrichtung. Mittels der Aufbringeinrichtung ist eine Antennenstruktur auf einen Trägerkörper aufbringbar. Die Aufbringeinrichtung kann beispielsweise eine Einrichtung zur Durchführung eines Siebdruckverfahrens sein.

Mittels der Durchleuchtungseinrichtung ist ein Durchleuchtungsbild zumindest eines Abschnitts der Antennenstruktur erzeugbar. Die Durchleuchtungseinrichtung kann insbesondere eine Strahlenquelle und einen Detektor umfassen. Die Durchleuchtungseinrichtung kann hierbei, wie vorhergehend erläutert, positionierbar sein oder ortsfest angeordnet sein.

Mittels der Auswerteeinrichtung ist zumindest ein Bildbereich bestimmbar, in dem der zumindest eine Abschnitt der Antennenstruktur oder ein Teil des Abschnitts abgebildet ist. Weiter ist mindestens ein Parameter einer Intensitätswertverteilung in dem zumindest einen Bildbereich bestimmbar, wobei ein parameterabhängiges Qualitätskriterium auswertbar ist.

Die vorgeschlagene Vorrichtung ermöglicht hierbei in vorteilhafter Weise die Durchführung eines der vorhergehend erläuterten Verfahren. Die Vorrichtung kann auch ein Positioniermittel zur Positionierung der Durchleuchtungseinrichtung oder der Antennenstruktur bzw. des Trägerkörpers umfassen. Hierdurch kann eine relative Position und/oder Orientierung der Durchleuchtungseinrichtung zur Antennenstruktur eingestellt werden. Auch ist es möglich, dass sequenziell mehrere Dokumente, also Trägerkörper mit einer Antennenstruktur, derart relativ zur Durchleuchtungseinrichtung positioniert werden, dass jeweils Durchleuchtungsbilder dieser Dokumente erzeugt werden können.

Weiter kann die Vorrichtung eine Steuereinrichtung zur Steuerung von antennenspezifischen Aufbringparametern umfassen. In Abhängigkeit des von der Auswerteeinrichtung bestimmten mindestens einen Parameters der Intensitätswertverteilung kann die Steuereinrichtung dann mindestens einen der vorhergehend erläuterten antennenspezifischen Aufbringparameter verändern.

Die Erfindung wird nachfolgend anhand der Figuren exemplarisch erläutert. Die Figuren zeigen:
- Fig. 1: einen Trägerkörper mit einer Antennenstruktur in einer schematischen Draufsicht,
- Fig. 2: Verfahrensschritte zur Herstellung des Trägerkörpers mit der Antennenstruktur in einem schematischen Querschnitt, (a) Bereitstellen des Trägerkörpers, (b) Aufdrucken von spiralförmigen Antennen-Leiterzügen einschließlich der Anschlusskontakte des Antennen-Leiterzuges auf den Trägerkörper,
- Fig. 3: einen Trägerkörper mit einer weiteren Antennenstruktur in einer schematischen Draufsicht,
- Fig. 4: ein schematisches Durchleuchtungsbild und
- Fig. 5: ein schematisches Blockschaltbild einer erfindungsgemäßen Vorrichtung.

Nachfolgend bezeichnen gleiche Bezugszeichen Elemente mit gleichen oder ähnlichen technischen Merkmalen.

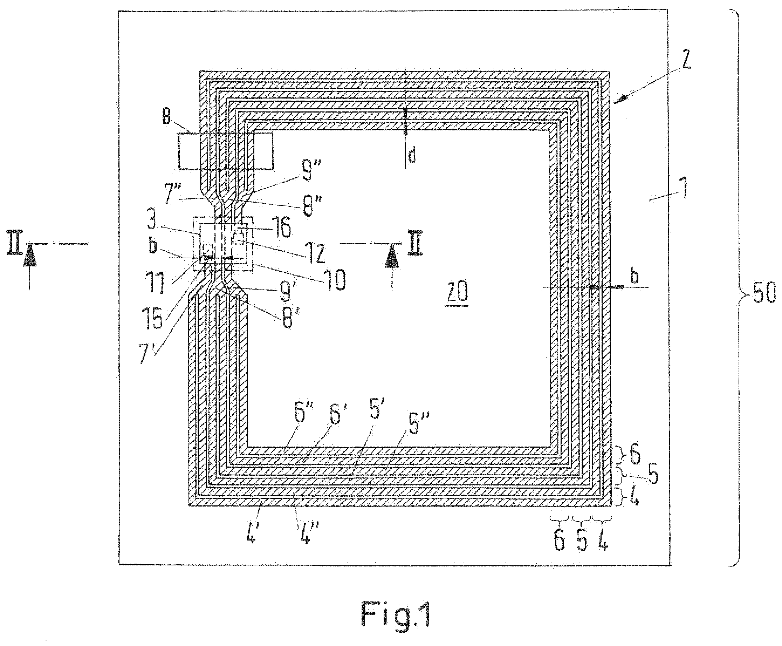

Die erfindungsgemäße kontaktlose Datenübertragungseinrichtung 50 gemäß Fig. 1 besteht aus einem Trägerkörper 1, auf dem eine Antennenstruktur 2 und ein elektronisches Bauelement 3, beispielsweise ein ungehäuster Chip, angeordnet sind. Der Chip 3 ist in einem Montagebereich 10 auf dem Trägerkörper 1 befestigt. Die als Antennen-Leiterzug ausgebildete Antennenstruktur 2 bildet ein Schaltkreiselement.

Der Trägerkörper 1 ist beispielsweise durch eine transparente (ungefüllte) Polycarbonatfolie mit einer Dicke von 80 µm, bevorzugt jedoch 100 µm, gebildet. Auf der Polycarbonatfolie befindet sich der durchgehende spiralförmige Antennen-Leiterzug mit zueinander parallelen Spiralwindungen 4, 5, 6. Jede der Spiralwindungen 4, 5, 6 bildet jeweils vier sich senkrecht zueinander erstreckende Windungsabschnitte, die eine Antenneninnenfläche 20 umschließen. Jede dieser Spiralwindungen 4, 5, 6 ist in jeweils zwei Spiralwindungsäste 4`, 4" bzw. 5', 5" bzw. 6', 6" aufgespalten, sodass die Spiralwindungen 4, 5, 6 in diesen Bereichen zweispurig verlaufen. Eine erste Spiralwindung 4 spaltet sich an den Verzweigungsstellen 7', 7" in die Spiralwindungsäste 4', 4", eine zweite Spiralwindung 5 an den Verzweigungsstellen 8', 8" in die Spiralwindungsäste 5`, 5" und eine dritte Spiralwindung 6 an den Verzweigungsstellen 9', 9" in die Spiralwindungsäste 6`, 6" auf. Im Montagebereich 10 des Chips 3 verlaufen die Spiralwindungen 4, 5, 6 einspurig. Die Spiralwindungen 4, 5, 6 verlaufen außerhalb des Montagebereiches 10 in einem geringen Abstand d parallel zueinander. Dieser Abstand d kann beispielsweise 200 µm betragen. Innerhalb des Montagebereiches 10, d.h. unter dem Chip 3, kann der Abstand zwischen den einspurigen Abschnitten der Spiralwindungen 4, 5, 6 noch geringer sein, weil die Spiralwindungen hier zwischen den Kontaktstellen 11, 12 des Chips 3 hindurchgeführt werden müssen.

Es ist selbstverständlich vorstellbar, dass die Spiralwindungen 4, 5, 6 auch vollständig einspurig ausgebildet sind.

Zur elektrischen Kontaktierung des Chips 3 ist dieser in Flip-Chip-Technik auf dem Trägerkörper 1 montiert. Hierzu sind dessen Kontaktstellen 11, 12 in Form von Kontakthöckern kongruent zu den Kontaktanschlüssen 15, 16 des Antennen-Leiterzuges ausgebildet, d.h. in einem Abstand, der dem Abstand der Kontaktstellen 11, 12 des Chips 3 entspricht. Jedoch können die Kontaktanschlüsse 15, 16 größer als die Kontakthöcker ausgebildet sein, um Lagetoleranzen zu erlauben. Der Chip 3 kann beispielsweise mittels eines anisotropen Klebers auf den Trägerkörper 1 aufgeklebt sein, um diesen dort mechanisch zu verankern und einen elektrischen Kontakt zwischen den Kontakthöckern 11, 12 und den Kontaktanschlüssen 15, 16 herzustellen.

Der Antennen-Leiterzug geht von einem ersten Kontaktanschluss 15 aus, der mit einem ersten Kontakthöcker 11 des Chips 3 in elektrischem Kontakt steht. Von dort aus erstreckt sich die erste Spiralwindung 4 entgegen dem Uhrzeigersinn über eine erste Verzweigungsstelle 7', an der sich aus der einspurigen ersten Spiralwindung 4 zwei erste Spiralwindungsäste 4', 4", die parallel zueinander verlaufen, bilden. Nach einem Umlauf (360°) vereinigen sich diese beiden ersten Spiralwindungsäste 4`, 4" an einer zweiten Verzweigungsstelle 7" wieder miteinander, sodass die erste Spiralwindung 4 wieder einspurig wird. Der Antennen-Leiterzug 2 durchquert dann den Montagebereich 10 des Chips 3 und verläuft hierzu unter dem Chip 3. Nach dem Verlassen des Montagebereichs 10 verzweigt sich die nunmehr zweite Spiralwindung 5 an der ersten Verzweigungsstelle 8' unter Bildung einer zweispurigen zweiten Spiralwindung, die durch die beiden zweiten Spiralwindungsäste 5`, 5" gebildet ist. Diese Äste 5`, 5" verlaufen wiederum parallel zueinander und im Gegenuhrzeigersinn parallel zu den ersten Spiralwindungsästen 4', 4" und zwar innerhalb der von diesen gebildeten Antennenfläche 20. Nach einem vollständigen Umlauf der zweiten Spiralwindungsäste 5', 5" vereinigen sich diese an der zweiten Verzweigungsstelle 8" wieder unter Bildung der einspurigen zweiten Spiralwindung 5. Nach dem Durchqueren des Montagebereichs 10 unter dem Chip 3 geht die zweite Spiralwindung 5 in die dritte Spiralwindung 6 über, die sich an der ersten Verzweigungsstelle 9' in zwei dritte Spiralwindungsäste 6', 6" aufspaltet, wobei eine zweispurige dritte Spiralwindung gebildet wird. Nach einem erneuten vollständigen Umlauf innerhalb der durch die ersten Spiralwindungsäste 4`, 4" und die zweiten Spiralwindungsäste 5`, 5" gebildeten Antennenfläche 20 erreicht die dritte zweispurige Spiralwindung 6 die zweite Verzweigungsstelle 9", wo sich die beiden Äste 6`, 6" wieder miteinander vereinigen und die einspurige dritte Spiralwindung 6 bilden. Diese endet im Montagebereich 10 unter dem Chip 3 in einem zweiten Anschlusskontakt 16, der mit einer durch einen Kontakthöcker gebildeten Kontaktstelle 12 des Chips elektrisch kontaktiert ist.

Die Breite b der Spiralwindungsäste 4', 4", 5', 5", 6', 6" ist über deren gesamten Verlauf gleich bleibend und genauso groß wie die Breite der einspurigen Abschnitte der Spiralwindungen 4, 5, 6 im Montagebereich 10 unter dem Chip 3 ausgebildet. Diese Breite b beträgt beispielsweise 250 µm.

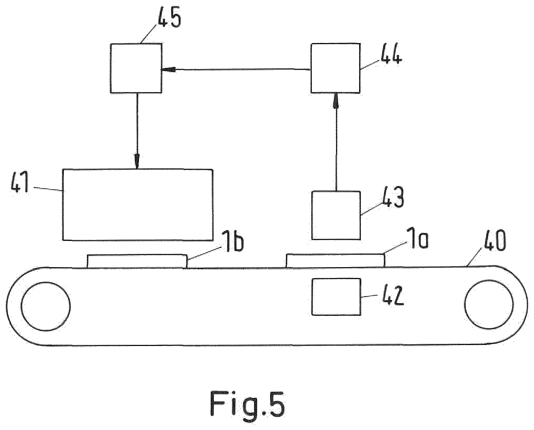

In Fig. 1 ist weiter ein Bereich B des Trägerkörpers 1 dargestellt, durch den sich parallel verlaufende Spiralwindungsäste 4', 4", 5', 5", 6', 6" der Spiralwindungen 4, 5, 6 erstrecken. Mittels einer Röntgeneinrichtung (siehe Fig. 5) kann ein Durchleuchtungsbild des Bereichs B erzeugt werden.

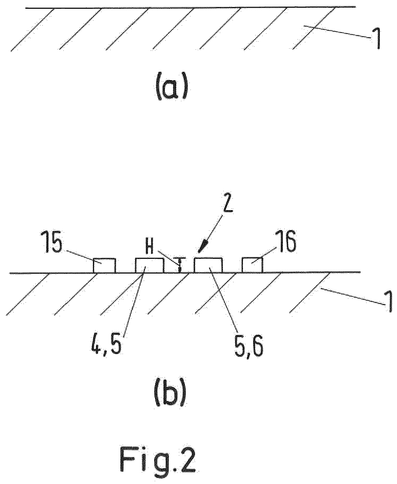

In Fig. 2 ist das Verfahren zur Herstellung der erfindungsgemäßen Datenübertragungseinrichtung 50 von Fig. 1 in einer schematischen Darstellung in Schnitten gemäß II - II (siehe Fig. 1) wiedergegeben.

In einem ersten Verfahrensschritt wird zunächst der Trägerkörper 1 bereitgestellt (Fig. 2a). In einem zweiten Verfahrensschritt wird der Antennen-Leiterzug, bestehend aus den Spiralwindungen 4, 5, 6 und den Anschlusskontakten 15, 16 auf dem Trägerkörper 1 erzeugt, beispielsweise durch Aufdrucken der Antennenstruktur 2 mit einer Silber-Leitpaste mittels Siebdruck (Fig. 2b). In Fig. 2b ist weiter eine Höhe H der Spiralwindungen 4, 5, 6 dargestellt, wobei eine Schichtdicke der Spiralwindungen von dieser Höhe H abhängig ist. Die Höhe H kann beispielsweise 12 µm bis 15 µm betragen.

In einem dritten Verfahrensschritt kann der Chip 3 (siehe Fig. 1) montiert werden. Der Chip 3 weist an seinen Kontaktstellen 11, 12 Kontakthöcker, beispielsweise aus Kupfer/Nickel/Gold, auf, die mit den Anschlusskontakten 15, 16 des Antennen-Leiterzuges 2, in elektrischen Kontakt gebracht sind. Hierzu ist der Chip 3 mit den Kontakthöckern 11, 12 auf die Anschlusskontakte 15, 16 aufgesetzt. Für die Chipmontage wird im Montagebereich 10 zunächst ein anisotroper Leitkleber 18 in dosierter Menge beispielsweise mit einem Dispenser auf den Trägerkörper 1 und den Antennen-Leiterzug aufgebracht. Dieser Leitkleber 18 enthält sehr kleine leitfähige Metallpartikel, die einen elektrischen Kontakt zwischen den Kontakthöckern 11, 12 des Chips und den Anschlusskontakten 15, 16 herstellen. Außerdem fixiert der Leitkleber 18 den Chip 3 mechanisch auf dem Trägerkörper 1.

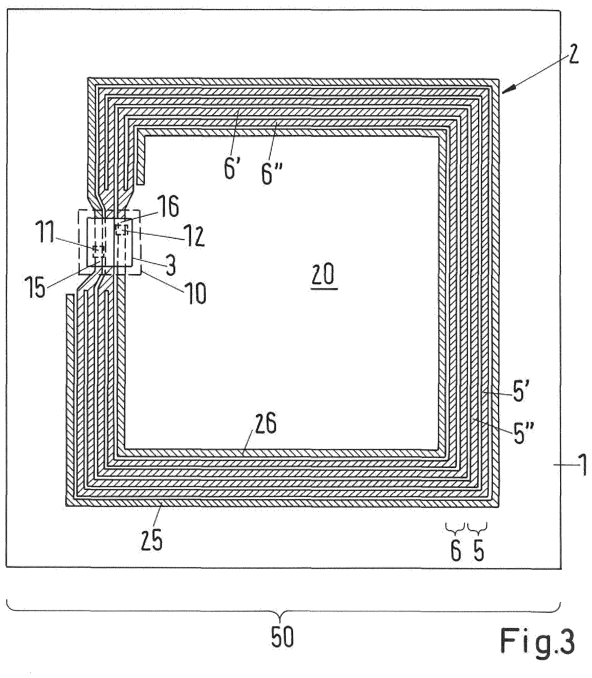

In Fig. 3 ist eine zweite Ausführungsform der erfindungsgemäßen Datenübertragungseinrichtung 50 dargestellt. Diese unterscheidet sich von der in Fig. 1 dargestellten ersten Ausführungsform dadurch, dass der Antennen-Leiterzug zum einen zwei Spiralwindungen 5, 6 anstelle von drei Spiralwindungen aufweist und dass zum anderen zusätzlich zwei Blind-Leiterzüge 25, 26 vorgesehen sind. Der Antennen-Leiterzug und die Blind-Leiterzüge 25, 26 bilden zusammen das Schaltkreiselement der kontaktlosen Datenübertragungseinrichtung 50.

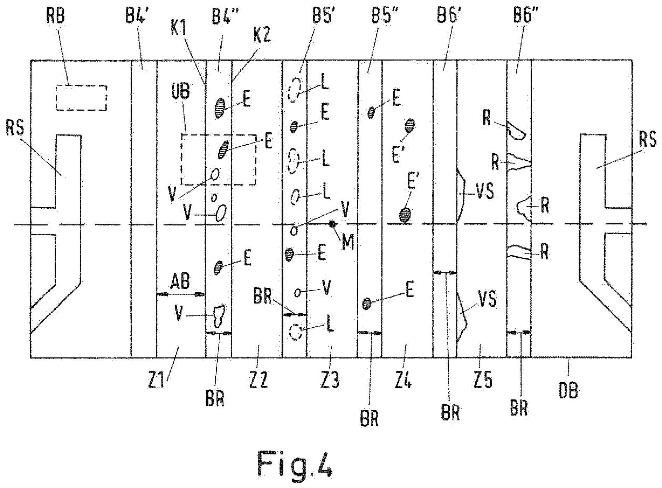

In Fig. 4 ist ein Durchleuchtungsbild DB des in Fig. 1 dargestellten Bereiches B des Trägerkörpers 1 dargestellt. Dargestellt sind die Bildbereiche B4', B4", B5', B5", B6', B6", in die die Spiralwindungsäste 4', 4", 5', 5", 6', 6" (siehe Fig. 1) abgebildet sind. In dem Durchleuchtungsbild DB sind hierbei von einem unteren Bildrand hin zu einem oberen Bildrand hin parallel verlaufende Spiralwindungsäste 4', 4", 5', 5", 6', 6" abgebildet. Weiter dargestellt sind Bildbereiche RS, in die Referenzstrukturen, die in Fig. 1 nicht dargestellt sind, abgebildet sind. Die Referenzstrukturen RS können beispielsweise durch Testleiterbahnen oder so genannten Stützleiterbahnen gebildet werden.

Dargestellt sind weiterhin abgebildete Erhebungen E einer Oberfläche der Spiralwindungsäste 4', ... 6", wobei sich die Oberfläche der Spiralwindungsäste 4', ... 6" in diesen Bereichen über eine gewünschte Referenzhöhe erhebt. Weiter dargestellt sind abgebildete Vertiefungen V in den Oberflächen der Spiralwindungsäste 4', ... 6". In diesen Bereichen liegt eine Oberfläche der Spiralwindungsäste 4', ... 6" unterhalb der gewünschten Referenzhöhe. Mit Strichlinien dargestellt sind abgebildete Lufteinschlüsse L in den die Spiralwindungsäste 4', ... 6" bildenden Leiterbahnen.

Weiter dargestellt sind abgebildete Rissstrukturen R in einem sechsten Spiralwindungsast 6". Diese Rissstrukturen R können sich hierbei über eine gesamte abgebildete Breite BR, die zur tatsächlichen Breite b korrespondiert, der abgebildeten Spiralwindungsäste 4', ... 6" oder nur über einen Teil davon erstrecken.

Hierbei ist dargestellt, dass ein erster Spiralwindungsast 4' fehlerfrei ist. Insbesondere weist dieser Spiralwindungsast 4' keine Erhebung E, keine Vertiefung V, keine Lufteinschlüsse L und keine Risse R auf. Auch weist der erste Spiralwindungsast 4' keine Verschmierungen VS auf wie beispielsweise ein fünfter Spiralwindungsast 6'. Dargestellt sind weiter Bildbereiche Z1, Z2, Z3, Z4, Z5, in die Zwischenräume abgebildet sind, die zwischen den jeweils benachbarten Spiralwindungsästen 4', ... 6' angeordnet sind. Exemplarisch ist ein abgebildeter Abstand AB zwischen dem ersten Spiralwindungsast 4' und einem zweiten Spiralwindungsast 4" dargestellt. Dieser Abstand AB entspricht einer Breite eines Zwischenraumes Z1 zwischen dem ersten und dem zweiten Spiralwindungsast 4', 4" und korrespondiert mit dem tatsächlichen Abstand d.

Mittels Methoden der Bildverarbeitung können hierbei die Bildbereiche B4', ... B6" bestimmt werden, in denen die einzelnen Spiralwindungsäste 4', ... 6" abgebildet sind. Das Bestimmen dieser Bildbereiche b4', ...B6" kann beispielsweise über eine kantenbasierte Segmentierung erfolgen. Dargestellt ist hierbei ein Untersuchungsbereich UB zur Kantendetektion.

Nachfolgend wird davon ausgegangen, dass ein Bildursprungspunkt in einer linken oberen Ecke des Durchleuchtungsbildes DB liegt. Zeilen des Durchleuchtungsbildes DB sind in aufsteigender Zeilenzahl ausgehend von dem Bildursprungspunkt untereinander, also in vertikaler Richtung, angeordnet. Bildspalten des Durchleuchtungsbildes DB sind in aufsteigender Spaltenzahl ausgehend vom Bildursprungspunkt in horizontaler Richtung nebeneinander angeordnet. Eine Breite wird nachfolgend als Breite in horizontaler Richtung, also in Spaltenrichtung, verstanden.

Eine Breite des Untersuchungsbereiches UB ist hierbei größer als eine Breite BR eines Bildbereiches B4', ... B6", jedoch kleiner als die Summe der Breite BR und des Abstandes AB zwischen zwei benachbarten Bildbereichen B4', ... B6". In Fig. 4 ist dargestellt, dass der Untersuchungsbereich UB einen Bildbereich B4" des Durchleuchtungsbildes DB umfasst, in den der zweite Spiralwindungsast 4" abgebildet ist.

In diesem Untersuchungsbereich UB wird nun zeilenweise ein Intensitätswertverlauf von Pixeln des Untersuchungsbereiches UB bestimmt. An einer in horizontaler Richtung ersten, also linken Kante K1 verringert sich der Intensitätswert und der Intensitätswertverlauf weist somit eine negative Steigung auf. An einer in horizontaler Richtung zweiten, also rechten, Kante K2 des zweiten Spiralwindungsastes 4" steigen Intensitätswerte an, wobei der Intensitätswertverlauf eine positive Steigung aufweist. In Abhängigkeit eines Intensitätsschwellwertes und an Maxima der ersten Ableitung des Intensitätswertverlaufs können im Untersuchungsbereich UB für jede Zeile Kantenpixel der ersten Kante K1 und der zweiten Kante K2 bestimmt werden. Ein Bildbereich zwischen der ersten Kante K1 und der zweiten Kante K2 wird nachfolgend als ein Teil des Bildbereichs B4" bestimmt, in den die Antennenstruktur 2, in diesem Fall insbesondere der zweite Spiralwindungsast 4", abgebildet ist. Der Untersuchungsbereich UB kann nachfolgend sowohl in horizontaler als auch in vertikaler Richtung verschoben werden, um Kantenpixel aller Kanten aller Bildbereiche B4', ... B6" zu detektieren. Gleichzeitig können Bildbereiche Z1,...Z5, die zwischen Kanten K1, K2 dieser Bildbereiche B4', ... B6" angeordnet sind, bestimmt werden.

Weiter dargestellt ist ein Referenzbereich RB des Durchleuchtungsbildes DB, welcher zur Bestimmung eines Referenzintensitätswertes dient. Dieser Referenzbereich RB ist in einem Bereich des Durchleuchtungsbildes DB angeordnet, in dem keine Antennenstruktur 2 abgebildet ist. Somit repräsentieren Intensitätswerte von Pixeln des Referenzbereiches RB eine Absorption von Röntgenstrahlung durch den Trägerkörper 1 (siehe Fig. 1). Als Referenzintensitätswert wird ein Mittelwert der Intensitätswertverteilung der Intensitätswerte der Pixel im Referenzbereich RB bestimmt.

Nachfolgend wird eine Differenz zwischen den Mittelwerten der Intensitätswertverteilung der Pixel in den Bildbereichen B4', ... B6" und dem Referenzintensitätswert bestimmt. Diese Differenz entspricht dann einer mittleren Schichtdicke des jeweils abgebildeten Spiralwindungsasts 4', ...6", die wiederum von den in Fig. 4 dargestellten Erhebungen E, Vertiefungen V und Lufteinschlüssen L abhängt.

Liegt eine dieser Differenzen außerhalb eines vorbestimmten Referenzbereiches und/oder ist eine Standardabweichung größer als eine vorbestimmte Referenzabweichung, so kann eine ungenügende Qualität der aufgebrachten Antennenstruktur 2, insbesondere der Spiralwindungsäste 4', ... 6", detektiert werden. Hierbei ist zu beachten, dass sich Lufteinschlüsse L sowohl auf den Mittelwert als auch auf die Standardabweichung auswirken können. Hierbei ist jedoch ein Einfluss auf den Mittelwert geringer als ein Einfluss auf die Standardabweichung.

Vor der Bestimmung des Bildbereiches B4', ... B6" können die Bildbereiche RS, in die die Referenzstrukturen abgebildet sind, z.B. modellbasiert, bestimmt werden. Hierdurch kann ein Referenzmittelpunkt M bestimmt werden, der auf einer horizontalen Mittellinie der Referenzstrukturen RS angeordnet ist. Hierdurch kann eine Ausrichtung des Durchleuchtungsbildes DB erfolgen. Insbesondere kann in Abhängigkeit des Mittelpunktes M eine Lage des Referenzbereiches RB und eine Lage des Untersuchungsbereiches UB bestimmt werden. Hierbei wird angenommen, dass vorbekannt ist, dass z.B. in einem Bildbereich über dem linken Bildbereich RS keine Spiralwindungsast 4', ... 6" abgebildet ist.

Weiter können pixelbasierte Breiten BR der Bildbereiche B4', ... B6" bestimmt werden. Auch können Abstände AB zwischen den einzelnen benachbarten Bildbereichen B4', ... B6" bestimmt werden. Ein Qualitätskriterium kann beispielsweise dann nicht erfüllt sein, wenn diese Breiten BR außerhalb eines vorbestimmten Bereiches liegen und/oder die Abstände AB außerhalb eines vorbestimmten Bereiches liegen.

Auch ist es möglich, für die Bildbereiche Z1,...Z5 einen Mittelwert und/oder eine Standardabweichung einer Intensitätswertverteilung von Pixeln dieses Bildbereiches Z1, ... Z5 zu bestimmen. Dies kann entsprechend den vorher angeführten Ausführungen zur Differenzbildung ebenfalls in Abhängigkeit des Referenzintensitätswertes erfolgen. Dies erlaubt eine Qualitätskontrolle von Zwischenräumen zwischen den Spiralwindungsästen 4', ... 6". In Fig. 4 ist dargestellt, dass ein vierter Zwischenraum abgebildete Erhebungen E' über einer Oberfläche des Trägerkörpers 1 aufweist. Hierdurch wird ein Mittelwert der Intensitätswertverteilung von Pixeln des Bildbereiches Z4, in dem der vierte Zwischenraum abgebildet ist, kleiner als ein Mittelwert der Intensitätswertverteilung von Pixeln z.B. eines Bildbereiches Z3, in dem ein dritter Zwischenraum abgebildet ist, sein.

Durch die Auswertung von den angeführten Parametern von Intensitätswertverteilungen in verschiedenen Bildbereichen können in vorteilhafter Weise Rückschlüsse auf eine Gleichmäßigkeit, eine Schichtdicke sowie auf eine Breite der Spiralwindungsäste 4', ... 6" gezogen werden. Auch die in Fig. 4 dargestellten abgebildeten Verschmierungen VS, die sich in einen fünften Zwischenraum zwischen dem fünften Spiralwindungsast 6' und dem sechsten Spiralwindungsast 6" erstrecken, beeinflussen einen Mittelwert und eine Standardabweichung einer Intensitätswertverteilung eines Bildbereiches Z5, in dem dieser fünfte Zwischenraum abgebildet ist. Wie auch die Erhebungen E, die Vertiefungen V und die Lufteinschlüssen L beeinflussen Rissstrukturen R im sechsten Spiralwindungsast 6" einen Mittelwert und eine Standardabweichung einer Intensitätswertverteilung eines Bildbereiches B6", in dem der sechste Spiralwindungsast 6" abgebildet ist.

Somit kann durch das vorgeschlagene Verfahren eine Qualität der Antennenstruktur 2, insbesondere eine Qualität der Schichtdicke der Spiralwindungsäste 4', ... 6", bestimmt werden. Auch können Verschmierungen oder fehlerhafte Stellen in Zwischenräumen bestimmt werden.

Ebenfalls kann ein resultierender Mittelwert der Mittelwerte aller Bildbereiche B4', ... B6", in die die Spiralwindungsäste 4', ... 6" abgebildet sind, bestimmt werden. Dieser resultierende Mittelwert liefert eine Information über eine Gleichmäßigkeit einer Schichtdicke der insgesamt abgebildeten Antennenstruktur α über einer Oberfläche des Trägerkörpers 1. Ebenfalls kann ein resultierender Mittelwert der Standardabweichungen bestimmt werden.

In Fig. 5 ist ein schematisches Blockschaltbild einer Vorrichtung zur Herstellung eines Wert- und/oder Sicherheitsdokuments dargestellt. Die Vorrichtung umfasst ein Transportband 40, welches zum Transport von Trägerkörpern 1 a, 1 b dient. Weiter umfasst die Vorrichtung eine Siebdruckeinrichtung 41 zur Aufbringung einer Antennenstruktur 2 (siehe Fig. 1) auf die Trägerkörper 1a, 1 b. Weiter umfasst die Vorrichtung eine Röntgeneinrichtung, die eine Strahlenquelle 42 und einen Detektor 43 umfasst. Auf einen ersten Trägerkörper 1 a ist bereits eine Antennenstruktur 2 aufgebracht. Mittels der Röntgeneinrichtung wird dann ein Durchleuchtungsbild DB (siehe Fig. 4) des ersten Trägerkörpers 1a erzeugt. Die Vorrichtung umfasst weiter eine Auswerteeinrichtung 44, die das erzeugte Durchleuchtungsbild DB wie vorhergehend beschrieben auswertet und insbesondere mindestens einen Parameter einer Intensitätswertverteilung bestimmt. Weiter umfasst die Vorrichtung eine Steuereinrichtung 45, die datentechnisch mit der Auswerteinrichtung 44 verbunden ist. Die Auswerteeinrichtung 44 kann die bestimmten Parameter an die Steuereinrichtung 45 übermitteln, wobei die Steuereinrichtung 45 in Abhängigkeit der übermittelten Parameter Siebdruckparameter zur Aufbringung der Antennenstruktur 2 auf den weiteren Trägerkörper 1 b einstellen kann.

Selbstverständlich ist es auch vorstellbar, dass zwar eine datentechnische Verbindung zwischen der Auswerteeinrichtung 44 und der Steuereinrichtung 45 besteht, jedoch die Trägerkörper 1a, 1 b nicht auf einem gemeinsamen Transportband 40 durch die Siebdruckeinrichtung 41 und die Röntgeneinrichtung transportiert werden. Z.B können die Siebdruckeinrichtung 41 und die Röntgeneinrichtung in zwei voneinander entkoppelten und somit nicht durch ein einziges Transportband 40 verbundenen Abschnitten einer Fertigungsstraße angeordnet sein.

## Patentansprüche

1. Verfahren zur Herstellung eines Wert- und/oder Sicherheitsdokuments mit einer Antennenstruktur (2), umfassend folgende Verfahrensschritte:
- Bereitstellen eines Trägerkörpers (1, 1a, 1 b),
- Aufbringen einer Antennenstruktur (2) auf den Trägerkörper (1, 1a, 1 b),
- Erzeugen eines Durchleuchtungsbildes (DB) zumindest eines Abschnitts der Antennenstruktur (2),
- Bestimmen zumindest eines Bildbereichs (B4', ... B6"), in dem der zumindest eine Abschnitt der Antennenstruktur (2) oder ein Teil des Abschnitts abgebildet ist,
- Bestimmen mindestens eines Parameters einer Intensitätswertverteilung in dem zumindest einen Bildbereich (B4', ... B6"),
- Auswerten eines parameterabhängigen Qualitätskriteriums.

2. Verfahren nach Anspruch 1, **dadurch gekennzeichnet, dass** ein Mittelwert und/oder eine Standardabweichung der Intensitätswertverteilung bestimmt wird/werden.

3. Verfahren nach einem der Ansprüche 1 bis 2, **dadurch gekennzeichnet, dass** die Antennenstruktur (2) zumindest einen Leiterzug umfasst, wobei ein Bildbereich bestimmt wird, in dem der mindestens eine Leiterzug oder ein Teil des Leiterzugs abgebildet ist, wobei mindestens ein Parameter einer Intensitätswertverteilung in dem mindestens einen Bildbereich bestimmt wird.

4. Verfahren nach einem der Ansprüche 1 bis 3, **dadurch gekennzeichnet, dass** die Antennenstruktur (2) einen ersten Abschnitt und mindestens einen weiteren Abschnitt umfasst, wobei mindestens ein erster Bildbereich bestimmt wird, in dem der erste Abschnitt oder ein Teil des ersten Abschnitts abgebildet ist, wobei mindestens ein weiterer Bildbereich bestimmt wird, in dem der weitere Abschnitt oder ein Teil des weiteren Abschnitts abgebildet ist, wobei mindestens ein Parameter einer ersten Intensitätswertverteilung in dem mindestens einen ersten Bildbereich und mindestens ein Parameter einer weiteren Intensitätswertverteilung in dem mindestens einen weiteren Bildbereich bestimmt wird.

5. Verfahren nach einem der Ansprüche 1 bis 4, **dadurch gekennzeichnet, dass** ein Bildbereich (Z1, Z2, Z3, Z4, Z5) bestimmt wird, in dem ein Zwischenraum zwischen benachbarten Abschnitten der Antennenstruktur (2) abgebildet ist, wobei mindestens ein Parameter einer Intensitätswertverteilung in dem Bildbereich (Z1, Z2, Z3, Z4, Z5) bestimmt wird.

6. Verfahren nach einem der Ansprüche 1 bis 5, **dadurch gekennzeichnet, dass** zusätzlich mindestens eine geometrische Dimension des mindestens einen Abschnitts der Antennenstruktur (2) bestimmt wird.

7. Verfahren nach einem der Ansprüche 1 bis 6, **dadurch gekennzeichnet, dass** zur Bestimmung des zumindest einen Bildbereichs (B4', ... B6"), in dem der zumindest eine Abschnitt der Antennenstruktur (2) oder ein Teil des Abschnitts abgebildet ist, eine Kantendetektion durchgeführt wird.

8. Verfahren nach einem der Ansprüche 1 bis 7, **dadurch gekennzeichnet, dass** das mindestens eine Qualitätskriterium in Abhängigkeit eines Vergleichs des mindestens einen Parameters der Intensitätswertverteilung eines Bildbereichs (B4', ... B6") mit einem Referenzparameter oder in Abhängigkeit eines Vergleichs von Parametern von Intensitätswertverteilungen verschiedener Bildbereiche (B4', ... B6") ausgewertet wird.

9. Verfahren nach einem der Ansprüche 1 bis 8, **dadurch gekennzeichnet, dass** das Verfahren folgende Verfahrensschritte umfasst:
- Bereitstellen eines ersten Trägerkörpers (1a),
- Aufbringen einer ersten Antennenstruktur (2) auf den ersten Trägerkörper (1a) in Abhängigkeit mindestens eines antennenspezifischen Aufbringparameters,
- Erzeugen eines Durchleuchtungsbildes (DB) zumindest eines Abschnitts der ersten Antennenstruktur (2),
- Bestimmen zumindest eines Bildbereichs (B4', ... B6"), in dem der zumindest eine Abschnitt der ersten Antennenstruktur (2) oder ein Teil des Abschnitts abgebildet ist,
- Bestimmen mindestens eines Parameters einer Intensitätswertverteilung in dem zumindest einen Bildbereich (B4', ... B6"),
- Bereitstellen eines weiteren Trägerkörpers (1 b),
- Aufbringen einer weiteren Antennenstruktur auf den weiteren Trägerkörper (1 b) in Abhängigkeit des mindestens einen antennenspezifischen Aufbringparameters, wobei der antennenspezifische Aufbringparameter in Abhängigkeit des mindestens einen Parameters der Intensitätswertverteilung bestimmt wird.

10. Vorrichtung zur Herstellung eines Wert- und/oder Sicherheitsdokuments mit einer Antennenstruktur (2), umfassend eine Aufbringeinrichtung, eine Durchleuchtungseinrichtung und mindestens eine Auswerteeinrichtung (44), wobei mittels der Aufbringeinrichtung eine Antennenstruktur (2) auf einen Trägerkörper (1, 1a, 1 b) aufbringbar ist,
wobei mittels der Durchleuchtungseinrichtung ein Durchleuchtungsbild (DB) zumindest eines Abschnitts der Antennenstruktur (2) erzeugbar ist, wobei mittels der Auswerteeinrichtung (44) zumindest ein Bildbereich (B4', ... B6") bestimmbar ist, in dem der zumindest eine Abschnitt der Antennenstruktur (2) oder ein Teil des Abschnitts abgebildet ist, wobei mindestens ein Parameter einer Intensitätswertverteilung in dem zumindest einen Bildbereich (B4', ... B6") bestimmbar ist, wobei ein parameterabhängiges Qualitätskriterium auswertbar ist.

## Claims

1. Method for producing a value document and/or security document having an antenna structure (2), comprising the following method steps:
- providing a carrier body (1, 1 a, 1 b),
- applying the antenna structure (2) to the carrier body (1, 1 a, 1 b),
- creating a transillumination image (DB) of at least one section of the antenna structure (2),
- defining at least one image region (B4', ... B6"), in which the at least one section of the antenna structure (2) or a part of the section is reproduced,
- determining at least one parameter of an intensity value distribution in the at least one image region (B4',... B6"),
- evaluating a parameter-dependent quality criterion.

2. Method according to claim 1 **characterised in that** an average value and/or a standard deviation of the intensity value distribution is/are defined.

3. Method according to any one of claims 1 or 2 **characterised in that** the antenna structure (2) comprises at least one conductor track, with an image region being defined in which the at least one conductor track or a part of the conductor track is reproduced, with at least one parameter of an intensity value distribution being determined the at least one image region.

4. Method according to any one of claims 1 to 3 **characterised in that** the antenna structure (2) comprises a first section and at least one further section, with at least one first image region being defined in which the first section or a part of the first section is reproduced, with at least one further image region being defined in which the further section or a part of the further section is reproduced, with at least one parameter of a first intensity value distribution in the at least one first image region being determined and at least one parameter of a further intensity value distribution in the at least one further image region being determined.

5. Method according to any one of claims 1 to 4 **characterised in that** an image region (Z1, Z2, Z3, Z4, Z5) is defined in which a clearance between adjacent sections of the antenna structure (2) is reproduced, with at least one parameter of an intensity value distribution being determined in the image region (Z1, Z2, Z3, Z4, Z5).

6. Method according to any one of claims 1 to 5 **characterised in that** additionally at least one geometric dimension of the at least one section of the antenna structure (2) is defined.

7. Method according to any one of claims 1 to 6 **characterised in that** an edge detection is carried out in order to define the at least one image region (B4', ... B6") in which the at least one section of the antenna structure (2) or a part of the section is reproduced.

8. Method according to any one of claims 1 to 7 **characterised in that** the at least one quality criterion is evaluated as a function of a comparison of the at least one parameter of the intensity value distribution of an image region (B4', ... B6") with a reference parameter or as a function of a comparison of parameters of intensity value distributions of different image regions (B4`, ... B6").

9. Method according to any one of claims 1 to 8 **characterised in that** the method comprises the following method steps:
- providing a first carrier body (1 a),
- applying a first antenna structure (2) to the first carrier body (1 a) as a function of at least one antenna-specific application parameter,
- creating a transillumination image (DB) of at least one section of the first antenna structure (2),
- defining at least one image region (B4', ... B6"), in which the at least one section of the first antenna structure (2) or a part of the section is reproduced,
- determining at least one parameter of an intensity value distribution in the at least one image region (B4', ... B6"),
- providing a further carrier body (1 b),
- applying a further antenna structure to the further carrier body (1 b) as a function of the at least one antenna-specific application parameter, with the antenna-specific application parameter being defined as a function of the at least one parameter of the intensity value distribution.

10. Device for producing a value document and/or security document having an antenna structure (2), comprising an application apparatus, a transillumination apparatus and at least one evaluation unit (44), wherein an antenna structure (2) is applicable to a carrier body (1, 1 a, 1 b) by way of the application apparatus,
wherein a transillumination image (DB) of at least one section of the antenna structure (2) is creatable by way of the transillumination apparatus, wherein (44) at least one image region (B4`, ... B6") in which the at least one section of the antenna structure (2) or a part of the section is reproduced is definable by way of the evaluation unit, wherein at least one parameter of an intensity value distribution in the at least one image region (B4' ... B6") is determinable, wherein a parameter-dependent quality criterion is evaluatable.

## Revendications

1. Procédé servant à fabriquer un document de valeur et/ou de sécurité pourvu d'une structure d'antenne (2), comprenant des étapes de procédé qui suivent consistant à :
- fournir un corps de support (1, 1a, 1b),
- appliquer une structure d'antenne (2) sur le corps de support (1, 1a, 1b),
- produire une image radioscopique (DB) d'au moins un segment de la structure d'antenne (2),
- définir au moins une zone d'image (B4', ... B6"), dans laquelle l'au moins un segment de la structure d'antenne (2) ou une partie du segment est reproduit(e),
- définir au moins un paramètre d'une répartition de valeur d'intensité dans l'au moins une zone d'image (B4', ... B6"),
- évaluer un critère de qualité dépendant du paramètre.

2. Procédé selon la revendication 1, **caractérisé en ce qu'**une valeur moyenne et/ou un écart standard de la répartition de valeur d'intensité est défini(e)/sont définis.

3. Procédé selon l'une quelconque des revendications 1 à 2, **caractérisé en ce que** la structure d'antenne (2) comprend au moins un chemin conducteur, dans lequel une zone d'image est définie, dans laquelle l'au moins un chemin conducteur ou une partie du chemin conducteur est reproduit(e), dans lequel au moins un paramètre d'une répartition de valeur d'intensité est défini dans l'au moins une zone d'image.

4. Procédé selon l'une quelconque des revendications 1 à 3, **caractérisé en ce que** la structure d'antenne (2) comprend un premier segment et au moins un autre segment, dans lequel au moins une première zone d'image est définie, dans laquelle le premier segment ou une partie du premier segment est reproduit(e), dans lequel au moins une autre zone d'image est définie, dans laquelle l'autre segment ou une partie de l'autre segment est reproduit(e), dans lequel au moins un paramètre d'une première répartition de valeur d'intensité est défini dans l'au moins une première zone d'image et au moins un paramètre d'une autre répartition de valeur d'intensité est défini dans l'au moins une autre zone d'image.

5. Procédé selon l'une quelconque des revendications 1 à 4, **caractérisé en ce qu'**une zone d'image (Z1, Z2, Z3, Z4, Z5) est définie, dans laquelle un espace intermédiaire entre des segments adjacents de la structure d'antenne (2) est reproduit, dans lequel au moins un paramètre d'une répartition de valeur d'intensité est défini dans la zone d'image (Z1, Z2, Z3, Z4, Z5).

6. Procédé selon l'une quelconque des revendications 1 à 5, **caractérisé en ce qu'**en supplément au moins une dimension géométrique de l'au moins un segment de la structure d'antenne (2) est définie.

7. Procédé selon l'une quelconque des revendications 1 à 6, **caractérisé en ce qu'**une détection d'arête est effectuée afin de définir l'au moins une zone d'image (B4', ... B6"), dans laquelle l'au moins un segment de la structure d'antenne (2) ou une partie du segment est reproduit(e).

8. Procédé selon l'une quelconque des revendications 1 à 7, **caractérisé en ce que** l'au moins un critère de qualité est évalué en fonction d'une comparaison entre l'au moins un paramètre de la répartition de valeur d'intensité d'une zone d'image (B4', ... B6") et un paramètre de référence ou en fonction d'une comparaison de paramètres de répartitions de valeur d'intensité de différentes zones d'image (B4', ... B6").

9. Procédé selon l'une quelconque des revendications 1 à 8, **caractérisé en ce que** le procédé comprend des étapes de procédé qui suivent consistant à :
- fournir un premier corps de support (1a),
- appliquer une première structure d'antenne (2) sur le premier corps de support (1a) en fonction au moins d'un paramètre d'application spécifique à l'antenne,
- produire une image radioscopique (DB) d'au moins un segment de la première structure d'antenne (2),
- définir au moins une zone d'image (B4', ... B6"), dans laquelle l'au moins un segment de la première structure d'antenne (2) ou une partie du segment est reproduit(e),
- définir au moins un paramètre d'une répartition de valeur d'intensité dans l'au moins une zone d'image (B4', ... B6"),
- fournir un autre corps de support (1b),
- appliquer une autre structure d'antenne sur l'autre corps de support (1b) en fonction de l'au moins un paramètre d'application spécifique à l'antenne, dans lequel le paramètre d'application spécifique à l'antenne est défini en fonction de l'au moins un paramètre de la répartition de valeur d'intensité.

10. Dispositif servant à fabriquer un document de valeur et/ou de sécurité pourvu d'une structure d'antenne (2), comprenant un système d'application, un système de radioscopie et au moins un système d'évaluation (44), dans lequel une structure d'antenne (2) peut être appliquée sur le corps de support (1, 1a, 1b) au moyen du système d'application,
dans lequel une image radioscopique (DB) d'au moins un segment de la structure d'antenne (2) peut être produite au moyen du système de radioscopie, dans lequel au moins une zone d'image (B4', ... B6") peut être définie au moyen du système d'évaluation (44), dans laquelle l'au moins un segment de la structure d'antenne (2) ou une partie du segment est reproduit(e), dans lequel au moins un paramètre d'une répartition de valeur d'intensité peut être défini dans l'au moins une zone d'image (B4', ... B6"), dans lequel un critère de qualité dépendant du paramètre peut être évalué.
